(19) **Europäisches Patentamt / European Patent Office / Office européen des brevets**

(11) **EP 4 316 764 B1**

(12) **EUROPEAN PATENT SPECIFICATION**

(45) Date of publication and mention
of the grant of the patent:
**31.12.2025 Bulletin 2026/01**

(51) International Patent Classification (IPC):
**B29B 9/06** (2006.01)      **C08J 3/12** (2006.01)
**C08J 9/16** (2006.01)      **B29C 44/00** (2006.01)
**B29C 48/04** (2019.01)

(21) Application number: **22780858.1**

(22) Date of filing: **29.03.2022**

(52) Cooperative Patent Classification (CPC):
**B29B 9/12; B29B 7/582; B29B 7/726; B29B 7/88;
B29C 44/3461; C08J 3/12; C08J 9/122; C08J 9/16;
C08J 9/232;** B29B 7/48; B29B 9/06; B29B 9/065;
B29C 48/04; B29C 48/05; B29C 48/345;      (Cont.)

(86) International application number:
**PCT/JP2022/015295**

(87) International publication number:
**WO 2022/210647 (06.10.2022 Gazette 2022/40)**

(54) **METHOD FOR PRODUCING POLYPROPYLENE RESIN EXTRUDED FOAM PARTICLES**

VERFAHREN ZUR HERSTELLUNG VON EXTRUDIERTEN
POLYPROPYLENHARZSCHAUMSTOFFPARTIKELN

PROCÉDÉ DE PRODUCTION DE PARTICULES EXPANSÉES EXTRUDÉES EN RÉSINE DE
POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2021 JP 2021055924**

(43) Date of publication of application:
**07.02.2024 Bulletin 2024/06**

(73) Proprietor: **Kaneka Corporation
Osaka-shi, Osaka 530-8288 (JP)**

(72) Inventor: **TOBIMATSU, Yuki
Settsu-shi, Osaka 566-0072 (JP)**

(74) Representative: **Vossius & Partner
Patentanwälte Rechtsanwälte mbB
Siebertstrasse 3
81675 München (DE)**

(56) References cited:
WO-A1-2018/016399      WO-A1-2020/004429
JP-A- 2013 010 890      JP-A- 2013 010 890
JP-A- 2018 059 055      JP-A- 2018 059 055

(52) Cooperative Patent Classification (CPC): (Cont.)
C08J 9/0061; C08J 2203/06; C08J 2323/12;
C08J 2323/14; C08J 2423/10

## Description

Technical Field

The present invention relates to a method for producing polypropylene-based resin extruded foamed particles.

Background Art

A polypropylene-based resin in-mold expanded product obtained with use of polypropylene-based resin foamed particles has characteristics such as the property of being formed in any shape, shock-absorbing properties, lightweight properties, and heat insulating properties, which are the advantages of an in-mold expanded product.

Examples of a method for producing polypropylene-based resin foamed particles encompass a batch expansion method, which is a discontinuous process, and an extrusion foaming method, which is a continuous process. Although the extrusion foaming method offers many advantages in the aspects of efficiency and the environment, there is a problem of difficulty in obtaining polypropylene-based resin foamed particles having good moldability.

For example, Patent Literature 1 discloses a method of adjusting the diameters of foamed particles such that the diameters are within a specific range, to produce thermoplastic resin foamed particles through an extrusion foaming method. WO2020004429A discloses a method for producing polypropylene-based resin extruded foamed particles.

Citation List

[Patent Literature]

[Patent Literature 1]
Japanese Patent Application Publication, Tokukaihei, No. 7-11041

Summary of Invention

Technical Problem

However, the conventional technique as described above is not sufficient in terms of obtaining polypropylene-based resin extruded foamed particles excellent in moldability and productivity, and is thus susceptible of further improvement.

An embodiment of the present invention has been made in the light of the above problem, and an object thereof is to provide a method for producing polypropylene-based resin extruded foamed particles capable of providing, with good productivity, polypropylene-based resin foamed particles excellent in moldability.

Solution to Problem

Specifically, a method for producing polypropylene-based resin extruded foamed particles in accordance with an embodiment of the present invention includes: a melt-kneading step of melt-kneading, with use of an extruder provided with a die, a composition that includes a blowing agent and a resin mixture which includes a polypropylene-based resin with a branched structure; an extruding step of extruding the composition through the die to a region which has a lower pressure than the extruder has and which is a liquid phase; a granulating step of granulating the composition in the region; and a step of obtaining polypropylene-based resin extruded foamed particles, the blowing agent being carbon dioxide, the region having a temperature of 40°C to 90°C, the composition having a pressure of not less than 14.5 MPa at an inlet of the die; and the composition being discharged in an amount of more than 2.5 kg/hr and not more than 5.0 kg/hr for each of holes of the die.

Advantageous Effects of Invention

With an embodiment of the present invention, it is possible to provide a method for producing polypropylene-based resin extruded foamed particles capable of providing, with good productivity, polypropylene-based resin foamed particles excellent in moldability.

Brief Description of Drawings

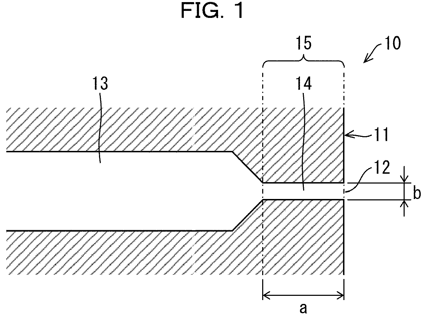

Fig. 1 is a cross-sectional view of the structure of the vicinity of an outlet of a die used in an embodiment of the present invention.

Description of Embodiments

The following description will discuss an embodiment of the present invention. The present invention is defined by the claims. Furthermore, a new technical feature can be formed by a combination of technical means disclosed in different embodiments. The expression "A to B", representing a numerical range, means "not less than A (inclusive of A and greater than A) and not more than B (inclusive of B and smaller than B)" unless otherwise specified herein.

[1. Technical idea of present invention]

Among methods for producing polypropylene-based resin foamed particles, a pressure-release expansion method, which is a batch expansion method, requires: a step of melt-kneading, and then extruding a polypropylene-based resin to obtain polypropylene-based resin particles; and an expansion step of pressurizing and heating, in an aqueous solvent, the polypropylene-based resin particles obtained together with an inorganic dispersing agent and a blowing agent to impregnate the blowing agent in the resin, and thereafter discharging the resin to a region having a low pressure to cause the resin to expand. There are the following problems with the pressure-release expansion method: because the pressure-release expansion method is a discontinuous process, the steps thereof are complicated; and because of the use of an inorganic dispersing agent, a wastewater treatment facility is necessary and extensive grounds for the facility is therefore necessary.

Contrarily, an extrusion foaming method is as follows: a composition including a thermoplastic resin and a blowing agent is fed to an extruder and the composition is melt-kneaded, and optionally cooled, so that a melt-kneaded composition (hereinafter, also referred to as an "foamable melt resin" is obtained; and the composition is then extruded to a low pressure region through a die attached to an end of the extruder and granulated, so that thermoplastic resin foamed particles are obtained.

Unlike the pressure-release expansion method, (a) the extrusion foaming method is a continuous process, and it is therefore possible to simplify the process, and (b) the extrusion foaming method does not require extensive grounds for a facility such as an wastewater treatment facility, and thus makes it possible to build a production base near an area in which there is demand for the product and allows reduction in transportation costs, labor costs, and any other costs. Therefore, the extrusion foaming method offers many advantages in the aspects of efficiency and the environment, and allows production of polypropylene-based resin foamed particles at low cost. However, there is a problem of difficulty in obtaining, by the extrusion foaming method, polypropylene-based resin foamed particles having good moldability. In particular, with the extrusion foaming method in which used as the blowing agent is carbon dioxide, the environmental load of which is low, gas retention at the time of expansion is lower than with the extrusion foaming method in which used as the blowing agent is an organic blowing agent. Thus, it is particularly difficult to obtain polypropylene-based resin foamed particles having good moldability through the extrusion foaming method in which carbon dioxide is used.

Granulating methods (granulation methods) for obtaining foamed particles by an extrusion foaming method are broadly divided into a cold cut method and a die face cut method. The die face cut method is a method of cutting a composition extruded through a die with use of a cutter that rotates while being in contact with a face of the die or while maintaining a small amount of clearance between the cutter and the face side.

The die face cut method is further classified on the basis of a difference in cooling method, as one of the following three methods: i.e., an under water cut (which can hereinafter be referred to as "UWC") method; a watering cut (which can hereinafter be referred to as "WRC") method; and a hot cut (which can hereinafter be referred to as "HC") method.

The UWC method is a method of filling a chamber attached to an end of a die with a liquid cooling medium (e.g., water) adjusted to have a predetermined pressure, such that the cooling medium is in contact with a face of the die, and cutting a melt resin extruded through the holes of the die in the cooling medium (e.g., in water). The UWC method is characterized by using the cooling medium also in transporting a resin to a subsequent device (water separator) while cooling the resin. The UWC method is a method of not only extruding a composition (also referred to as a melt resin) obtained by melt-kneading in an extruder, into a liquid phase (into a liquid cooling medium, e.g., into water) through a die but also granulating the composition with use of a granulating section (e.g., cutter or the like) provided immediately after the die and in the liquid phase.

As a method for improving productivity in the UWC method, there is a method of increasing the amount of a composition discharged for each hole of a die and/or increasing the number of holes of the die. In this respect, increasing the number of holes of the die requires upsizing of a facility or an additional production facility, and therefore entails high cost. In contrast, increasing the amount of a composition discharged for each hole of a die does not entail the cost of introducing an additional facility. However, in a case where the amount of a composition discharged for each hole of a die is increased to be, for example, more than 1.2 kg/hr, polypropylene-based resin extruded foamed particles obtained can have a reduced moldability. The present inventor is the first to find this. Thus, the present inventor found that with the conventional method, it can be difficult to improve productivity while keeping the moldability of polypropylene-based resin extruded foamed particles at a good level.

To address this, the present inventor conducted diligent studies to successfully improve productivity (e.g., to successfully increase the amount of a composition discharged for each hole of a die to an amount of more than 1.2 kg/hr), while keeping the moldability of polypropylene-based resin extruded foamed particles at a good level, in the UWC method. As a result, the present inventor uniquely obtained the following finding to complete the present invention: in case of increasing the amount of a composition discharged for each hole of a die to an amount of more than 1.2 kg/hr, the moldability of extruded foamed particles obtained is improved, by using, as the composition, a composition that includes carbon dioxide and a polypropylene-based resin with a branched structure, and controlling (a) the temperature of a liquid phase and (b) the pressure of the composition at an inlet of the die such that (a) and (b) are within respective proper ranges and increasing (c) the amount of the composition discharged for each hole of the die to an amount of more than 2.5 kg/hr. In particular, it was surprising that the problem of the reduction in moldability caused by increasing the amount of the composition discharged for each hole of the die to an amount of more than 1.2 kg/hr had been overcome by further increasing the amount of the composition discharged to an amount of more than 2.5 kg/hr.

Further, the present inventor investigated the reason why the above (a) to (c) allow an improvement in the moldability of the extruded foamed particles. As a result of the investigation, the present inventor presumed the reason as follows:

(1) It is presumed that under a high-production condition of the amount of a foamable melt resin discharged for each hole of a die being more than 1.2 kg/hr and not more than 2.5 kg/hr, an foaming preparation time is longer than a solidification preparation time. It is presumed that in a case where the foaming preparation time is longer than the solidification preparation time, solidification due to the cooling of the foamable melt resin starts before the start of foaming of the foamable melt resin (i.e., before the start of expansion of cells). When the cells expand by the foaming under the condition where the resin becomes less easily extended due to the solidification, the membranes of the cells are likely to break. The polypropylene-based resin extruded foamed particles having many broken cell membranes are poor in moldability.

(2) It is presumed that the solidification preparation time becomes longer than the foaming preparation time by using, as the foamable melt resin, a foamable melt resin that includes carbon dioxide and a polypropylene-based resin with a branched structure, and controlling the above (a) and (b) such that (a) and (b) are within proper ranges, and further adjusting the amount of the foamable melt resin discharged for each hole of the die to an amount of more than 2.5 kg/hr and not more than 5.0 kg/hr. It is presumed that in a case where the solidification preparation time is longer than the foaming preparation time, the solidification starts while the cells expand by the foaming or after the cells sufficiently expand by the foaming. Thus, polypropylene-based resin extruded foamed particles obtained have the cell membranes retained therein and therefore exhibit excellent moldability. It should be noted that the present invention is in no way limited to these presumptions.

The "foaming preparation time" means a time required for the foamable melt resin to start foaming after being discharged into the liquid phase. In other words, the "foaming preparation time" can also refer to a time required for the pressure of a blowing agent contained in the foamable melt resin discharged into the liquid phase to decrease to a pressure (the saturated pressure of carbon dioxide) at which expansion can be started.

The "solidification preparation time" means a time required for the foamable melt resin to start solidifying after being discharged into the liquid phase. In other words, the "solidification preparation time" can also refer to a time for the temperature of the foamable melt resin discharged into the liquid phase to decrease to a temperature (the melting point of a resin mixture) at which solidification is started. It should be noted that the present invention is in no way limited to these presumptions.

Note that as used herein, the term "moldability" is a characteristic of polypropylene-based resin extruded foamed particles and means easiness of molding. As used herein, the phrase "good moldability" is intended to mean that it is easy to further expand polypropylene-based resin extruded foamed particles and fuse the polypropylene-based resin extruded foamed particles together, during in-mold expansion molding. Thus, the "good moldability" herein is intended to mean that a high expansion ratio is provided and polypropylene-based resin in-mold in-mold expanded product excellent in fusibility is therefore easily obtained. In the present specification, the moldability is evaluated on the basis of a 50% compressive strength of the polypropylene-based resin extruded foamed particles. The method for evaluating the 50% compressive strength will be described later in detail in the descriptions of Examples.

[2. Method for producing polypropylene-based resin extruded foamed particles]

A method for producing polypropylene-based resin extruded foamed particles in accordance with an embodiment of the present invention, the method including: a melt-kneading step of melt-kneading, with use of an extruder provided with a die, a composition that includes a blowing agent and a resin mixture which includes a polypropylene-based resin with a branched structure; an extruding step of extruding the composition through the die to a region which has a lower pressure than the extruder has and which is a liquid phase; a granulating step of granulating the composition in the region; and a step of obtaining polypropylene-based resin extruded foamed particles, the blowing agent being carbon dioxide, the region having a temperature of 40°C to 90°C, the composition having a pressure of not less than 14.5 MPa at an inlet of the die; and the composition being discharged in an amount of more than 2.5 kg/hr and not more than 5.0 kg/hr for each of holes of the die.

In the present specification, the "region which is a liquid phase" can be referred to as a "liquid phase region", the "polypropylene-based resin with a branched structure" can be referred to as a "branched polypropylene-based resin", the "polypropylene-based resin extruded foamed particles" can be referred to as "extruded foamed particles", the "composition that includes carbon dioxide serving as a blowing agent and a resin mixture which includes a polypropylene-based resin with a branched structure" can be referred to as a "composition", and the "method for producing polypropylene-based resin extruded foamed particles in accordance with an embodiment of the present invention" can be referred to as the "present production method".

The present production method, which has the above configuration, offers the advantage that it is possible to obtain polypropylene-based resin extruded foamed particles excellent in moldability with high productivity. More specifically, the present production method offers the advantage that, in an under water cut method, even in a case of a high-production condition of an increased amount of the composition discharged for each hole of a die, it is possible to obtain polypropylene-based resin extruded foamed particles excellent in moldability.

Descriptions of raw materials (components) and a production device used in the present production method will be provided first, followed by the description of each of the steps of the present production method.

(2-1. Resin mixture)

In the present production method, a resin mixture that includes a polypropylene-based resin with a branched structure can also refer to be the component of the composition other than a blowing agent. The resin mixture includes a polypropylene-based resin with a branched structure and can optionally further include additives such as a cell nucleating agent and a coloring agent.

In the present specification, "polypropylene-based resin with a branched structure" is intended to mean: (a) a polypropylene-based resin in which molecules of a polypropylene-based resin in which a branched structure is not introduced are partially intermolecularly crosslinked with each other and (b) a polypropylene-based resin in which, as a branched chain, a diene compound or the like other than (poly)propylene is introduced in a polypropylene-based resin in which a branched structure is not introduced. Further, in the present specification, the polypropylene-based resin with a branched structure is intended to mean a polypropylene-based resin having a loss tangent $\tan \delta$ at 200°C and at 0.1 rad/s of not more than 5. Other aspects (including the measurement method) of the loss tangent $\tan \delta$ will be described in detail in the section (Polypropylene-based resin with a branched structure), which will be described later.

In the present specification, the "polypropylene-based resin which has no branched structure introduced therein" can be referred to as a "linear polypropylene-based resin". The "polypropylene-based resin with a branched structure" can be referred to as a "branched polypropylene-based resin". The "linear polypropylene-based resin" and the "branched polypropylene-based resin" can collectively be referred to as a "polypropylene-based resin". The linear polypropylene-based resin can also refer to a raw material of the branched polypropylene-based resin.

In the present specification, the linear polypropylene-based resin is intended to mean a resin which includes a structural unit derived from a propylene monomer in a proportion of not less than 50 mol% relative to 100 mol% of all structural units included in the resin. In the present specification, the "structural unit derived from a propylene monomer" can be referred to as a "propylene unit".

(Linear polypropylene-based resin)

The linear polypropylene-based resin may be (a) a homopolymer of propylene, (b) a block copolymer, an alternating copolymer, a random copolymer, or a graft copolymer that is a copolymer of propylene and a monomer other than propylene, or (c) a mixture of at least two selected from the group consisting of the homopolymer of (a) and the copolymers of (b).

The linear polypropylene-based resin may include, in addition to the propylene unit, a structural unit derived from a monomer other than a propylene monomer, in such a manner as to include the structural unit in a quantity of one or more units or as to include one or more types of the structural units. The "monomer other than a propylene monomer" used in producing the linear polypropylene-based resin can be referred to as a "comonomer". The "structural unit derived from the monomer other than a propylene monomer" included in the linear polypropylene-based resin can be referred to as a "comonomer unit".

Examples of the comonomer encompass monomers such as: (a) an $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, or 1-decene; (b) a cyclic olefin such as cyclopentene, norbornene, or tetracyclo[6,2,11,8,13,6]-4-dodecene; (c) a diene such as 5-methylene-2-norbornene, 5-ethylidene-2-norbornene, 1,4-hexadiene, methyl-1,4-hexadiene, or 7-methyl-1,6-octadiene; and (d) a vinyl-based monomer such as vinyl chloride, vinylidene chloride, acrylonitrile, methacrylonitrile, vinyl acetate, acrylic acid, an acrylic ester, methacrylic acid, a methacrylic ester, maleic acid, maleic anhydride, a styrene-based monomer, vinyltoluene, or divinylbenzene.

Examples of the acrylic ester encompass methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic ester encompass methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomer encompass styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The linear polypropylene-based resin includes a comonomer unit which is preferably a structural unit derived from an $\alpha$-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration offers the following advantages: (a) a branched polypropylene-based resin having a high melt tension and a low gel fraction is obtained; and (b) the branched polypropylene-based resin obtained is capable of providing polypropylene-based resin extruded foamed particles excellent in moldability.

The linear polypropylene-based resin is preferably a propylene homopolymer, a polypropylene-based block copolymer, a polypropylene-based alternating copolymer, and/or a polypropylene-based random copolymer, and is more preferably a propylene homopolymer and/or a polypropylene-based random copolymer. This configuration offers the following advantages: (a) a branched polypropylene-based resin having a high melt tension and a low gel fraction is obtained; and (b) the branched polypropylene-based resin obtained is capable of providing polypropylene-based resin extruded foamed particles excellent in moldability.

The linear polypropylene-based resin includes the propylene unit in an amount which is preferably not less than 90 mol%, more preferably not less than 93 mol%, even more preferably not less than 95 mol%, and particularly preferably not less than 97 mol%, relative to 100 mol% of all structural units included in the linear polypropylene-based resin. This configuration offers the advantage that a branched polypropylene-based resin having a high melt tension and a low gel fraction is obtained.

The linear polypropylene-based resin has a melting point that is not particularly limited. The melting point of the linear polypropylene-based resin is, for example, preferably 130°C to 165°C, more preferably 135°C to 164°C, even more preferably 138°C to 163°C, and particularly preferably 140°C to 162°C. The melting point of the linear polypropylene-based resin being within the above range offers (a) the advantage that extruded foamed particles obtained are excellent in moldability and (b) the advantage that the extruded foamed particles are capable of providing an in-mold expanded product excellent in resistance to breakage. (a) The melting point of the linear polypropylene-based resin being not less than 130°C offers the following advantages: there is no possibility of a decrease in the dimensional stability of the in-mold expanded product; there is no possibility of the in-mold expanded product having insufficient heat resistance; and the in-mold expanded product tends to have an increased compressive strength, and (b) the melting point of the linear polypropylene-based resin being not more than 165°C, which allows the molding of the extruded foamed particles at a relatively low steam pressure, offers the advantage of allowing the molding of the extruded foamed particles with use of a general-purpose molding machine intended for polypropylene-based resin extruded foamed particles.

In the present specification, the melting point of a linear polypropylene-based resin is a value determined through measurement by differential scanning calorimetry (hereinafter referred to as "DSC method"). A specific operational procedure is as follows: (1) the temperature of 5 mg to 6 mg of the linear polypropylene-based resin is increased from 40°C to 220°C at a temperature increase rate of 10°C/minute so that the linear polypropylene-based resin is melted; (2) thereafter, the temperature of the linear polypropylene-based resin melted is decreased from 220°C to 40°C at a temperature decrease rate of 10°C/min so that the linear polypropylene-based resin is crystallized; and (3) thereafter, the temperature of the linear polypropylene-based resin crystallized is further increased from 40°C to 220°C at a temperature increase rate of 10°C/min. The temperature corresponding to the peak (melting peak) of a DSC curve of the linear polypropylene-based resin, the DSC curve being obtained in the second temperature increase (i.e., in (3)), can be determined, with the temperature being considered the melting point of the linear polypropylene-based resin. Note that, in a case where as a result of carrying out the above-described method, there is more than one peak (melting peak) in the DSC curve, obtained in the second temperature increase, of the linear polypropylene-based resin, the temperature corresponding to a peak (melting peak) at which the quantity of melting heat is the greatest is considered the melting point of the linear polypropylene-based resin. As the differential scanning calorimeter, DSC6200 type manufactured by Seiko Instruments Inc. can be used, for example.

The linear polypropylene-based resin has a melt flow rate (MFR) that is not particularly limited. For example, the MFR of the linear polypropylene-based resin at 230°C is preferably 0.5 g/10 minutes to 50.0 g/10 minutes, more preferably 1.0 g/10 minutes to 30.0 g/10 minutes, further preferably 2.0 g/10 minutes to 20.0 g/10 minutes, and particularly preferably 2.0 g/10 minutes to 10.0 g/10 minutes. The MFR of the linear polypropylene-based resin at 230°C being within the above range offers the advantage that it is possible to easily obtain a branched polypropylene-based resin having an MFR at 230°C of 0.5 g/10 minutes to 20 g/10 minutes.

In the present specification, the MFR of the linear polypropylene-based resin is a value determined by measurement carried out with use of an MFR measuring instrument described in JIS K7210 under the following conditions: the diameter of an orifice is $2.0959 \pm 0.0050$ mmφ; the length of the orifice is $8.000 \pm 0.025$ mm; a load is 2160 g; and a temperature is $230 \pm 0.2$°C.

(Polypropylene-based resin with branched structure)

The polypropylene-based resin with a branched structure (branched polypropylene-based resin) can be obtained by introducing a branched structure into the linear polypropylene-based resin. A method for introducing a branched structure into a linear polypropylene-based resin is not particularly limited, but examples of the method encompass (a1) a method of subjecting a linear polypropylene-based resin to irradiation and (a2) a method of melt-kneading a mixture that includes a linear polypropylene-based resin, a conjugated diene-based compound, and a radical polymerization initiator.

Examples of a specific method of the method (a1) encompass the method disclosed in Japanese Translation of PCT International Publication, Tokuhyo, No. 2002-542360.

Here is a further description of the method (a2). In the method (a2), a branched polypropylene-based resin can be obtained by, for example, carrying out the following (i) to (iv) in sequence: (i) a mixture of a linear polypropylene-based resin, a conjugated diene-based compound, and a radical polymerization initiator is melt-kneaded in a device provided with a die; (ii) a melt-kneaded product obtained is extruded through the die; (iii) the melt-kneaded product (also referred to as a strand) extruded is cooled; and (iv) the strand is granulated simultaneously with the cooling or after the cooling. Examples of a specific method of the method (a2) encompass the method disclosed in WO2020/004429.

In an embodiment of the present invention, the branched polypropylene-based resin is preferably a branched polypropylene-based resin obtained by the method (a2), in other words, by melt-kneading a mixture that includes a linear polypropylene-based resin, a conjugated diene-based compound, and a radical polymerization initiator, because: (i) it is possible to stably introduce a branched structure into the linear polypropylene-based resin, and the reproducibility of introduction of a branched structure is high; and/or (ii) there is no need for a complicated facility and it is possible to obtain a branched polypropylene-based resin with high productivity.

The branched polypropylene-based resin obtained by using a linear polypropylene-based resin as a raw material has a part (in other words, a main chain) other than a crosslink portion, the part having a structure derived from the structure of the linear polypropylene-based resin. Therefore, as each of the aspects of the main chain of the branched polypropylene-based resin, the descriptions of the linear polypropylene-based resin can be adopted as appropriate. A preferable aspect of the linear polypropylene-based resin is also a preferable aspect of the main chain of the branched polypropylene-based resin. For example, the main chain of the branched polypropylene-based resin is preferably at least one selected from the group consisting of a propylene homopolymer, a polypropylene-based block copolymer, and a polypropylene-based random copolymer, and more preferably at least one selected from the group consisting of a propylene homopolymer and a polypropylene-based random copolymer. This configuration offers (a) the advantage that the branched polypropylene-based resin has a high melt tension and a low gel fraction and (b) the advantage that the branched polypropylene-based resin is capable of providing polypropylene-based resin extruded foamed particles excellent in moldability.

The loss tangent tan δ of the branched polypropylene-based resin can be smaller than the loss tangent tan δ of the linear polypropylene-based resin. The loss tangent tan δ is a ratio (G''/G') between a storage modulus G' and a loss modulus G''. When the loss tangent tan δ of a resin is smaller, it is possible to improve the moldability of polypropylene-based resin extruded foamed particles obtained, to a greater degree. The loss tangent tan δ of the branched polypropylene-based resin at 200°C at 0.1 rad/s is preferably not more than 4, more preferably not more than 3, and even more preferably not more than 2. The lower limit of the loss tangent tan δ of the branched polypropylene-based resin is not particularly limited, but is, for example, not less than 0.3.

Here is a description of a method for measuring the loss tangent tan δ in the present specification. In the present specification, the loss tangent tan $\delta$, the storage modulus G', and the loss modulus G'' are measured through a vibration experiment carried out with use of a rotational rheometer (manufactured by TA Instruments, product name: ARES), in a nitrogen atmosphere, at a measurement temperature of 200°C, and at a measurement angular frequency of 0.1 rad/s. The details of the measurement are the following (1) to (3): (1) a sample resin (branched polypropylene-based resin) for measurement is sandwiched between two parallel plates (gap: 1 mm); (2) periodic strain generated by vibration is applied to the sample resin between the plates by driving one of the plates; and (3) from the waveform of shearing stress generated in response to the strain applied and a phase difference between the stress and the strain, the storage modulus G', the loss modulus G'', and thee loss tangent tan $\delta$ are determined.

The branched polypropylene-based resin has a melt flow rate that is not particularly limited. For examples, the MFR of the branched polypropylene-based resin at 230°C is preferably 0.5 g/10 minutes to 20.0 g/10 minutes, more preferably 1.0 g/10 minutes to 15.0 g/10 minutes, and particularly preferably 2.0 g/10 minutes to 10.0 g/10 minutes.

In the present specification, the MFR of the branched polypropylene-based resin is a value determined by measurement carried out with use of an MFR measuring instrument described in JIS K7210 under the following conditions: the diameter of an orifice is 2.0959 ± 0.0050 mmφ; the length of the orifice is 8.000 ± 0.025 mm; a load is 2160 g; and a temperature is 230 ± 0.2°C.

The branched polypropylene-based resin has a melt tension at 200°C which is not particularly limited. Typically, the melt tension of a branched polypropylene-based resin can be higher than the melt tension of a linear polypropylene-based resin which is a raw material of the branched polypropylene-based resin. For example, the melt tension at 200°C of the branched polypropylene-based resin is preferably 3 cN to 20 cN, more preferably 3 cN to 15 cN, and particularly preferably 3 cN to 10 cN. This configuration offers the advantage that it is possible to obtain extruded foamed particles having a broad molding range. Note that the term "molding range" is intended to mean the range of steam pressures of a steam during in-mold expansion molding carried out with use of extruded foamed particles, the range allowing provision of an in-mold in-mold expanded product having desired physical properties (e.g., a desired fusion ratio).

In the present specification, the melt tension of the branched polypropylene-based resin is measured with use of Capilograph 1D (manufactured by TOYO SEIKI SEISAKU-SHO, LTD, Japan). The details of the measurement are the following (1) to (5): (1) a barrel having a diameter of 9.55 mm that has been heated to a test temperature (200°C) is filled with a sample resin (branched polypropylene-based resin) for measurement; (2) subsequently, the sample resin is heated for 10 minutes within the barrel, which has been heated to the test temperature (200°C); (3) subsequently, while the sample resin is discharged in the form of a strand through a capillary die (opening diameter: 1.0 mm, length: 10 mm) at a piston lowering speed (10 mm/minutes) which is kept constant, this strand-like resin is passed through a tension detecting pulley located 350 mm below the capillary die, and thereafter, take-up of the strand-like resin with use of a take-up roll is started; (4) after the drawing of the strand-like resin becomes stable, the speed at which the strand-like resin is taken up is increased from an initial speed of 1.0 m/minute to a speed of 200 m/minute at a constant rate for 4 minutes; (5) a load acting on the pulley, which is equipped with a load cell, at a point in time when the strand-like resin fractures is measured as the melt tension.

(Another resin and rubber)

The resin mixture may further include rubber and/or a resin (which can hereinafter be referred to as "another resin") other than the branched polypropylene-based resin, to the extent that the effect of an embodiment of the present invention is not impaired. Such another resin and rubber may be collectively referred to as "another resin, etc." Examples of the another resin encompass (a) a linear polypropylene-based resin such as an ethylene/propylene random copolymer, an ethylene/propylene block copolymer, an ethylene/propylene alternating copolymer, or a propylene homopolymer, (b) an ethylene-based resin such as high-density polyethylene, medium-density polyethylene, low-density polyethylene, linear low-density polyethylene, linear very-low-density polyethylene, an ethylene/vinyl acetate copolymer, an ethylene/acrylic acid copolymer, or an ethylene / methacrylic acid copolymer and (c) a styrene-based resin such as polystyrene, a styrene/maleic anhydride copolymer, or a styrene/ethylene copolymer. Examples of the rubber encompass olefin-based rubber such as ethylene/propylene rubber, ethylene/butene rubber, ethylene/hexene rubber, or ethylene/octene rubber.

The amount of the another resin, etc. contained in the resin mixture is, for example, preferably not more than 60 parts by weight, more preferably not more than 40 parts by weight, and even more preferably not more than 20 parts by weight, relative to 100 parts by weight of the resin mixture. The lower limit of the amount of the another resin, etc. contained is not particularly limited, but may be, for example, 0 parts by weight relative to 100 parts by weight of the resin mixture.

(Cell nucleating agent)

The resin mixture may include a cell nucleating agent for the purpose of controlling the number and shape of cells in the extruded foamed particles to be obtained. Examples of the cell nucleating agent can encompass a sodium bicarbonate-citric acid mixture, monosodium citrate, talc, and calcium carbonate. One of these cell nucleating agents may be used singly, or two or more of these cell nucleating agents may be used in combination.

The amount of the cell nucleating agent used, which is, in other words, the amount of the cell nucleating agent contained in the resin mixture, is not particularly limited. For example, the amount of the cell nucleating agent used is preferably 0.01 parts by weight to 5.00 parts by weight, more preferably 0.01 parts by weight to 3.50 parts by weight, even more preferably 0.01 parts by weight to 1.00 part by weight, and particularly preferably 0.01 parts by weight to 0.50 parts by weight, relative to 100 parts by weight of the branched polypropylene-based resin. In the present specification, the "amount used" can be referred to as the "amount blended".

(Coloring agent)

The resin mixture may or may not include a coloring agent. In a case where the resin mixture does not include a coloring agent, extruded foamed particles having a natural color (e.g., a color derived from the resin mixture) can be obtained. In a case where the resin mixture includes a coloring agent, extruded foamed particles having a desired color (i.e., a color derived from the coloring agent) can be obtained. Examples of the coloring agent encompass perylene-based organic pigments, azo-based organic pigments, quinacridone-based organic pigments, phthalocyanine-based organic pigments, threne-based organic pigments, dioxazine-based organic pigments, isoindoline-based organic pigments, and carbon black. One of these coloring agents may be used singly, or two or more of these coloring agents may be used in combination. In a case where an in-mold expanded product is used in a member that can be seen by a person, it is required, in some cases, that the in-mold expanded product be black, from the perspective of design or the like. Thus, as the coloring agent, carbon black is preferable. The amount of the coloring agent used, which is, in other words, the amount of the coloring agent contained in the resin mixture, is not particularly limited.

(Another component)

As necessary, the resin mixture may further include another component which is (a) a stabilizer such as an antioxidant, a metal deactivator, a phosphorous processing stabilizer, an ultraviolet absorber, an ultraviolet stabilizer, a fluorescent brightening agent, metallic soap, or an antacid adsorbent, and/or (b) an additive such as a crosslinking agent, a chain transfer agent, a lubricant, a plasticizer, a filler, a reinforcer, a flame retardant, or an antistatic agent. One of these components may be used singly, or two or more of these components may be used in combination.

(Melting point of resin mixture)

The resin mixture has a melting point that is not particularly limited. For example, the melting point of the resin mixture is preferably 130°C to 165°C, more preferably 135°C to 164°C, even more preferably 138°C to 163°C, and particularly preferably 140°C to 162°C. The melting point of the resin mixture being within the above range offers (a) the advantage that extruded foamed particles obtained are excellent in moldability and (b) the advantage that the extruded foamed particles are capable of providing an in-mold expanded product excellent in resistance to breakage. (a) The melting point of the resin mixture being not less than 130°C offers the following advantages: there is no possibility of a decrease in the dimensional stability of the in-mold expanded product; there is no possibility of the in-mold expanded product having insufficient heat resistance; and the in-mold expanded product tends to have an increased compressive strength, and (b) the melting point of the resin mixture being not more than 165°C, which allows the molding of the extruded foamed particles at a relatively low steam pressure, offers the advantage of allowing the molding of the extruded foamed particles with use of a general-purpose molding machine intended for polypropylene-based resin extruded foamed particles.

In the present specification, the melting point of the resin mixture is determined through measurement by the DSC method. Specifically, the melting point of the resin mixture can be identified by a method the same as the above method for measuring the melting point of the linear polypropylene-based resin, except that the resin mixture is used instead of the linear polypropylene-based resin.

(2-2. Composition)

In the present production method, a substance obtained by adding a blowing agent to the resin mixture described above can be referred to as a "composition".

In the present production method, carbon dioxide is used as the blowing agent. With this configuration, the present production method offers the advantages of a low production cost and a low load on the environment.

It is preferable that the composition does not substantially include a substance which can serve as a blowing agent and which is other than carbon dioxide. Specifically, the amount of a substance contained in the composition, the substance being capable of serving as the blowing agent and being other than carbon dioxide, is preferably not more than 0.01 parts by weight, more preferably not more than 0.001 parts by weight, even more preferably not more than 0.0001 parts by weight, and particularly preferably 0 parts by weight, relative to 100 parts by weight of the composition.

Examples of the substance which can serve as the blowing agent and which is other than carbon dioxide encompass (a) aliphatic hydrocarbons such as propane, normal butane, isobutane, normal pentane, isopentane, and hexane, (b) alicyclic hydrogens such as cyclopentane and cyclobutane, (c) inorganic gases such as air and nitrogen, and (d) water.

The amount of the blowing agent used may be adjusted as appropriate according to a target expansion ratio of an expanded product. For example, in the present production method, the amount of the blowing agent used (the total amount of the blowing agent used) is preferably 0.5 parts by weight to 7.0 parts by weight, more preferably 0.5 parts by weight to 6.0 parts by weight, more preferably 0.5 parts by weight to 5.0 parts by weight, even more preferably 0.5 parts by weight to 4.0 parts by weight, and particularly preferably 0.5 parts by weight to 3.0 parts by weight, relative to 100.0 parts by weight of the resin mixture. The "amount of the blowing agent used" can also refer to the "amount of carbon dioxide used", and can also refer to the "amount of the blowing agent (carbon dioxide) contained in the composition".

(2-3. Production device)

Here is a description of a production device used in the present production method. The production device used in the present embodiment is a device for melt-kneading a composition, extruding the melt-kneaded composition to a liquid phase region, and granulating polypropylene-based resin extruded foamed particles by carrying out granulating in the region. Such a production device may be an extruder provided with a die. The extruder includes: a kneading device for melt-kneading the composition; and a granulating section having a die. In the extruder, the kneading device and the granulating section having a die are connected to each other, and are disposed in this order from the upstream side toward the downstream side of an extruding direction of the composition. To the kneading device, a raw material feeding device and a blowing agent feeding device may be connected. Between the kneading device and the granulating section, a cooling section for reducing the temperature of the composition may be provided. Upstream of the granulating section, e.g., between the cooling section and the granulating section, a diverter valve (switching valve) may be provided. Further, between the kneading device and the granulating section, e.g., between the kneading device and the cooling section and/or between the cooling section and the granulating section, a transporting section for transporting a resin may be provided.

In the extruder, (a) a raw material of the resin mixture, such as the branched polypropylene-based resin, is fed to the kneading device through the raw material feeding device, and (b) carbon dioxide serving as the blowing agent is fed to the kneading device through the blowing agent feeding device. The resin mixture and carbon dioxide serving as the blowing agent that are in the kneading device are melt-kneaded. The composition melt-kneaded then optionally passes through the transporting section, the cooling section, and the diverter valve, and reaches the granulating section. Subsequently, the composition extruded to the liquid phase region through the holes of the die of the granulating section is granulated with use of a cutter provided in the region, and is granulated while foaming in the region, so that polypropylene-based resin extruded foamed particles are produced. With respect to the flow of the composition flowing from the kneading device to the granulating section, the kneading device-side is defined as an upstream side, and the granulating section-side is defined as a downstream side.

As the kneading device, a device selected as appropriate from among conventionally known kneading devices can be used. Examples of such a device encompass a kneading device in which a screw is used. It is possible to use, for example, a single screw extruder and/or a twin screw extruder as the kneading device in which a screw is used. In a case of using a twin screw extruder, the rotation directions of the screws may be the same, or may be different from each other.

The raw material feeding device includes a member for feeding a raw material such as a branched polypropylene-based resin. The number of the raw material feeding devices can be set as appropriate according to the characteristics, types, number, etc. of the raw materials of the resin mixture

The blowing agent feeding device includes a member for feeding carbon dioxide, which serves as the blowing agent, to the resin mixture to be melt-kneaded in the kneading device. More specifically, the blowing agent feeding device is provided with a blowing agent storing section (carbon dioxide cylinder) and a pump (high-pressure pump). In the blowing agent feeding device, the blowing agent stored in the blowing agent storing section is fed to the kneading device via the pump.

The transporting section includes a transporting member for transporting the composition from the kneading device to the granulating section. The transporting member may be a known transporting member that is used in an extrusion foaming method. Examples of such a transportation member encompass a gear pump. The gear pump is a member useful for maintaining a flow pressure of a composition or for increasing the flow pressure as appropriate.

The cooling section includes a cooling member for cooling the composition transported from the transporting section (kneading device in a case where the transporting section is omitted). The cooling member may be a known cooling member that is used in an extrusion foaming method. Examples of the cooling member encompass a single screw extruder, a static mixer, and a melt cooler. The cooling member is preferably at least one selected from the group consisting of a single screw extruder, a static mixer, and a melt cooler. One of the above cooling members may be used singly, or two or more of the above cooling members may be used in combination.

The diverter valve is disposed upstream of the granulating section, and is a switching valve for switching between transfer of the composition to the granulating section and discharge of the composition to the outside. In cases where: the physical properties or properties of the melt-kneaded composition do not become stable and is not in a steady state; the temperatures of the sections of the extruder do not become stable and is not in a steady state; and granulation is temporarily stopped due to cutting failure or blockage of holes of the die, the composition is not fed to the granulating section but is discharged to the outside via the diverter valve. Further, in a case where the physical properties or properties of the composition and the temperatures of the sections of the extruder become stable and are be in a steady state, or in a case where granulation is resumed after the cutting failure or the blockage of holes of the die are eliminated, the composition is fed to the granulating section via the diverter valve.

The granulating section having a die is disposed at the furthest position on the downstream side of the flow of the composition. Fig. 1 is a cross-sectional view of the structure of the vicinity of an outlet of the die used in an embodiment of the present invention.

A die 10 includes a face 11 at an end thereof. The face 11 is a surface of the die 10, the surface being in contact with the outside. In an embodiment of the present invention, the face 11 is the surface in contact with a liquid phase. In the face 11 of the die 10, at least one hole 12 which serves as an outlet for the composition is formed. The hole 12 is in connection with a resin passage 13, inside the die 10. In the die 10, the diameter of the hole 12 is smaller than the diameter of the resin passage 13. Between the hole 12 and the resin passage 13, a land portion 15 is formed, the land portion 15 being provided with a flow channel 14 that has a diameter the same as the diameter of the hole 12 and smaller than the diameter of the resin passage 13. In other words, the die 10 includes the land portion 15. In still other words, the hole 12 can be said to include the flow channel 14. Further, the land portion 15 refers to a region of the die 10, the region being provided with the flow channel 14, which has a diameter smaller than the diameter of the resin passage 13.

The diameter of the hole 12 is indicated by the reference sign b in Fig. 1. In the present specification, in a case where the hole 12 do not has a perfect circular shape, the diameter of the hole 12 is intended to mean the diameter of the inscribed circle of the shape of the hole 12. In a case where the shape (which can hereinafter be referred to simply as the "shape of the resin passage 13") of a cross section of the resin passage 13, the cross section being perpendicular to the extruding direction, is a perfect circular shape, the diameter of the resin passage 13 is intended to mean the diameter of the shape of the resin passage 13. In a case where the shape of the resin passage 13 is not a perfect circular shape, the diameter of the resin passage 13 is intended to mean the diameter of the inscribed circle of the shape of the resin passage 13. In a case where the shape (which can hereinafter be referred to simply as the "shape of the flow channel 14") of a cross section of the flow channel 14, the cross section being perpendicular to the extruding direction, is a perfect circular shape, the diameter of the flow channel 14 is intended to mean the diameter of the shape of the flow channel 14. In a case where the shape of the flow channel 14 is not a perfect circular shape, the diameter of the flow channel 14 is intended to mean the diameter of the inscribed circle of the shape of the flow channel 14.

The resin passage 13 is in connection with an outlet at an end of the extruder. That is, the composition having melt-kneaded inside the extruder moves from the end of the extruder, passes through the resin passage 13 in the die 10, passes through the flow channel 14 of the land portion 15, reaches the hole 12, and is extruded into the liquid phase region through the hole 12.

The shape (which can hereinafter be referred to simply as the "shape of the hole 12") of a cross section of the hole 12 of the die 10, the cross section being perpendicular to the extruding direction, is not particularly limited. The shape of the hole 12 of the die 10 is preferably a perfect circular shape, a substantially circular shape, or an oval shape, and more preferably a perfect circular shape or a substantially circular shape, because it is possible to obtain extruded foamed particles having a spherical shape or a substantially spherical shape. The number of the holes 12 with which the die 10 is provided is not particularly limited.

Although not particularly limited, the diameter of the hole 12 is preferably less than 1.0 mm, more preferably not more than 0.90 mm, even more preferably not more than 0.85 mm, and particularly preferably not more than 0.80 mm. The diameter of the hole 12 being less than 1.0 mm offers the advantage that extruded foamed particles each of which has a low weight (a weight not greater than the weight prescribed in the standard) and each of which has the shape of a perfect sphere or a substantially perfect sphere are obtained. Although the lower limit of the diameter of the hole 12 is not particularly limited, because the pressure of the composition at an inlet of the die 10 is higher when the diameter of the hole 12 is smaller, the lower limit is preferably not less than 0.3 mm, more preferably not less than 0.4 mm, even more preferably not less than 0.5 mm, and particularly preferably not less than 0.6 mm from the perspective of resistance of the die 10 to pressure.

By adjusting the length of the land portion 15, that is, the length (reference sign a in Fig. 1) of the flow channel 14, the pressure of the composition inside the die 10 can be adjusted to be within a desired range. When the length of the land portion 15 is longer, the pressure of the composition inside the die 10 tends to increase, and when the length of the land portion 15 is shorter, the pressure of the composition inside the die 10 tends to decrease. The preferable length of the land portion 15 varies according to, for example, the physical properties of the branched polypropylene-based resin, the temperature of the composition, and the amount of the composition discharged, and is not particularly limited. According to an embodiment, the length of the land portion 15 is, for example, preferably 0.5 mm to 5.5 mm, more preferably 1.5 mm to 5.0 mm, and even more preferably 2.0 mm to 4.0 mm. The length of the land portion 15 being not less than 0.5 mm, which causes the land portion 15 to have good pressure resistant capability, offers the advantage that the shape and size of the hole 12 is easily retained. The length of the land portion 15 being not more than 5.5 mm offers the advantage that the pressure of the composition inside the die 10 is easily controlled to be within a suitable range. Note that the diameter of the flow channel 14 is equal to the diameter of the hole 12. Thus, the length of the land portion 15 can refer to the length of the hole 12 having the diameter described above.

The resin passage 13 has a length and a diameter that are not particularly limited, but can be adjusted as appropriate according to the total amount of the composition discharged, the total amount depending on the number of the holes 12.

The granulating section further includes a cutter. In the granulating section, polypropylene-based resin extruded foamed particles are granulated by an UWC method. The cutter is a member for cutting, in a liquid phase region, the composition having extruded through the hole 12 of the die 10. The cutter may include one or more cutter blades and a rotational shaft. The cutter blades are configured to push the face 11 of the die 10 or maintain a small amount of clearance between the face 11 and the cutter blades while rotating about the rotational shaft.

In addition, the granulating section may further include a cutter case in which the cutter is accommodated. According to an embodiment, the inside of the cutter case may be a region which has a lower pressure than the extruder and being a liquid phase.

(2-4. Melt-kneading step)

The present production method includes a melt-kneading step of melt-kneading a composition that includes carbon dioxide serving as a blowing agent and a resin mixture which includes a branched polypropylene-based resin. The melt-kneading step can refer to a step of melting the branched polypropylene-based resin and dissolving the blowing agent in the branched polypropylene-based resin, in the kneading device of the extruder. Further, the melt-kneading step can refer to a step of preparing a melt-kneaded product of the composition that includes the blowing agent and the resin mixture which includes the branched polypropylene-based resin.

In the melt-kneading step, it is only necessary that the blowing agent be ultimately dissolved in the branched polypropylene-based resin. In the melt-kneading step, the order and method of feeding the branched polypropylene-based resin and the blowing agent to the melt-kneading section are not particularly limited, but is, for example, the following method: (1) the branched polypropylene-based resin is fed to the kneading device from the raw material feeding device, and the branched polypropylene-based resin is melt-kneaded; and (2) thereafter, the blowing agent is fed, from the blowing agent feeding device located in the middle part of the kneading device, to the branched polypropylene-based resin having been melt-kneaded, i.e., a method of preparing (completing) a composition in the kneading device and further melt-kneading the composition.

In a case where the another resin, the cell nucleating agent, and the another component, which are used as necessary, are added to the composition in the above-described method, a method and an order of feeding these raw materials to the kneading device are not particularly limited. The another resin, the cell nucleating agent, and the another component, which are used as necessary, may be added simultaneously with the branched polypropylene-based resin and/or the blowing agent, or may be added separately and in random order.

In the melt-kneading step, a barrel temperature of the kneading device at which the raw materials, including the branched polypropylene-based resin, are melted is not particularly limited, provided that the temperature is within a range that does not hinder the feeding of the blowing agent to the raw materials. When the branched polypropylene-based resin is not melted at the location of the kneading device at which the blowing agent is fed, there is a possibility that the blowing agent escapes to the upstream side of the kneading device. Therefore, it is preferable to set the barrel temperature such that the branched polypropylene-based resin is completely melted and the blowing agent does not vaporize due to a high resin temperature. For example, the barrel temperature at which the branched polypropylene-based resin is melt-kneaded is preferably 160°C to 260°C, more preferably 170°C to 240°C, and even more preferably 180°C to 220°C.

The melt-kneading step may further include a cooling step of decreasing the temperature of the melt-kneaded composition to a temperature falling within a range in which the melt-kneaded composition does not solidify, for example, after melt-kneading the composition by the above-described method. The cooling step is carried out by transporting, to the cooling section, the composition having melt-kneaded in the kneading device and cooling the composition to a desired temperature in the cooling section.

In a case where the cooling step is carried out in the cooling section, the temperature of the composition at an outlet of the cooling section ranges, for example, preferably from the melting point of a resin mixture, the resin mixture including a branched polypropylene-based resin, plus 0°C to the melting point plus 40°C, more preferably from the melting point of the resin mixture plus 10°C to the melting point plus 40°C, even more preferably from the melting point of the resin mixture plus 10°C to the melting point plus 30°C, and particularly preferably from the melting point of the resin mixture plus 10°C to the melting point plus 20°C. The temperature of the composition at the outlet of the cooling section being within the above range offers the advantage that the temperature of the composition immediately after entry into the die 10 is easily adjusted to be within a preferable range. The temperature of the composition at the outlet of the cooling section can be controlled to be within a desired range, by adjusting, for example, the temperature and heat transfer area of the cooling member and a time for which the composition stays in the cooling member.

(2-5. Extruding step)

The present production method includes an extruding step of extruding the composition through the die 10 to a region which has a lower pressure than the extruder has and which is a liquid phase. The extruding step can refer to a step of extruding, to a liquid phase through the die 10, the composition obtained in the melt-kneading step, that is, the composition having been melt-kneaded.

In the present production method, the pressure of the composition at the inlet of the die 10 is adjusted to be not less than 14.5 MPa. The pressure is more preferably not less than 16.0 MPa, even more preferably not less than 18.0 MPa, and particularly preferably not less than 20.0 MPa. With the pressure of the composition at the inlet of the die 10 being not less than 14.5 MPa, polypropylene-based resin extruded foamed particles excellent in moldability is likely to be obtained even under high-production conditions in the UWC method. It is presumed that one of the reasons for this is that in a case where the pressure of the composition at the inlet of the die 10 is not less than 14.5 MPa, the temperature of the composition passing through the flow channel 14 of the land portion 15 of the die 10 increases due to shear heat. It is presumed that the temperature of the composition increases immediately before the composition is discharged through the hole 12 of the die 10, that is, while the composition is passing through the land portion 15, so that the solidification preparation time of the composition discharged in the liquid phase becomes longer than the foaming preparation time. It is presumed that due to the solidification preparation time longer than the foaming preparation time, the foamable melt resin starts solidifying after finishing foaming (expanding) or while being foamed. As a result, the cell membranes are retained, so that polypropylene-based resin extruded foamed particles that exhibit excellent moldability are obtained. It should be noted that the present invention is in no way limited to these presumptions. Further, in a case where the temperature of the composition exceeds a proper range at a point in time before the composition passes through the land portion 15, a problem of a decrease in the compressive strength of an in-mold expanded product prepared by molding the extruded foamed particles obtained can arise. Furthermore, in a case where, in order for the solidification preparation time to be longer than the foaming preparation time, the following problem can arise: the temperature of the composition inside the die 10 is increased by increasing the set temperature of the die 10, the viscosity of the composition decreases and the cell membranes are easily broken while the composition is being foamed, accordingly. Note that, in the present specification, the "pressure of the composition at the inlet of the die" is expressed as a gage pressure.

The upper limit of the pressure of the composition at the inlet of the die 10 is not particularly limited, but is preferably not more than 35.0 MPa, more preferably not more than 30.0 MPa, even more preferably not more than 28.0 MPa, and particularly preferably not more than 25.0 MPa, from the perspective of resistance of the die 10 to pressure.

Examples of a method for adjusting the pressure of the composition at the inlet of the die 10 such that the pressure is within a desired range encompass a method for adjusting each of various conditions that can affect the pressure of the composition at the inlet of the die 10. The various conditions that can affect the pressure encompass (a) the length of the land portion 15, (b) the amount of the composition discharged for each hole of the die 10, (c) the temperature of the composition inside the die 10 (e.g., the temperature of the composition immediately after entry into the die 10), (d) the temperature of the die 10, (e) the content ratio of the carbon dioxide in the composition, (f) the diameter b of the hole 12, and (g) the temperature of the liquid phase.

The pressure of the composition at the inlet of the die 10 can be measured via (a) a pressure gauge installed in the vicinity of the inlet of the die 10 or (b) a pressure gauge installed so as to be in contact with the composition immediately before the entry of the composition into the die 10, for example, a pressure gauge installed in the vicinity of an outlet of the transporting section, so as to be in contact with the composition in the vicinity of the outlet of the transporting section. The pressure of the composition can vary in the middle of the passage of the composition through the die 10. The pressure gauge for measuring the pressure of the composition immediately after entry into the die 10 is, for example, preferably installed within 20 mm upstream or downstream of the inlet of the die 10 along the extruding direction.

For the purpose of improving productivity and improving the moldability of extruded foamed particles obtained, the amount of the composition discharged for each hole of the die 10 in the extruding step is more than 2.5 kg/hr. From the perspective of improving productivity, it is more preferable that the amount of the composition discharged for each hole of the die 10 in the extruding step is greater. The amount of the composition discharged for each hole of the die 10 is not particularly limited, but may be, for example, not less than 2.8 kg/hr, or may be not less than 3.0 kg/hr. Meanwhile, when the amount of the composition discharged for each hole of the die 10 is greater, the pressure of the composition at the inlet of the die 10 tends to be higher. In a case where the amount of the composition discharged for each hole of the die 10 is more than 1.2 kg/hr and not more than 2.5 kg/hr, the moldability of extruded foamed particles obtained is likely to decrease. It is presumed that one of the reasons for this is that the cell membranes in the extruded foamed particles are likely to be broken due to the foaming preparation time longer than the solidification preparation time. It should be noted that the present invention is in no way limited to the presumption. The amount of the composition discharged for each hole of the die 10 being not more than 1.2 kg/hr can improve the moldability of extruded foamed particles obtained, but results in reduced productivity.

In order for the moldability of extruded foamed particles obtained to be maintained at a high level, the amount of the composition discharged for each hole of the die 10 is not more than 5.0 kg/hr, preferably not more than 4.5 kg/hr, more preferably not more than 4.0 kg/hr, even more preferably not more than 3.6 kg/hr, and particularly preferably not more than 3.3 kg/hr.

Examples of a method for adjusting the amount of the composition discharged for each hole of the die 10 such that the amount is within a desired range encompass a method of adjustment through the total amount of the composition discharged and a method of adjustment through the number of the holes 12 of the die 10.

In the present production method, the temperature of the composition immediately after entry into the die 10 is adjusted such that the temperature ranges preferably from the melting point of the resin mixture plus 0°C to the melting point plus 40°C, more preferably from the melting point of the resin mixture plus 10°C to the melting point plus 40°C, even more preferably from the melting point of the resin mixture plus 10°C to the melting point plus 30°C, and particularly preferably the melting point of the resin mixture plus 10°C to the melting point plus 20°C. This configuration offers the advantages that (a) the pressure of the composition at the inlet of the die 10 is easily adjusted to be in a preferable range and (b) a molded product prepared by molding extruded foamed particles obtained tends to have a high compressive strength. When the temperature of the composition immediately after entry into the die 10 is lower, the viscosity of the composition tends to be higher, and the pressure of the composition at the inlet of the die 10 tends to be higher.

Examples of a method for adjusting the temperature of the composition immediately after entry into the die 10 such that the temperature is within a range of the melting point of the resin mixture plus 0°C to the melting point plus 40°C encompass a method of adjusting each of various conditions that can affect the temperature. Such various conditions encompass (a) a set temperature of the die 10, the length (which can be referred to as the thickness of the die 10) of the die 10 in the extruding direction, and the size (the area of contact with a liquid phase) of the face 11 of the die 10, (b) the temperature of the composition at the neighboring members (extruder, cooling section, transporting section, diverter valve), and (c) the temperature of a liquid phase, which will be described later.

The temperature of the composition immediately after entry into the die 10 can be measured via (a) a thermometer installed in the vicinity of the inlet of the die 10 or (b) a thermometer installed so as to be in contact with the composition immediately before the entry of the composition into the die 10, for example, a thermometer installed in the vicinity of an outlet of the transporting section, so as to be in contact with the composition in the vicinity of the outlet of the transporting section. The temperature of the composition can vary in the middle of the passage of the composition through the die 10. The thermometer for measuring the temperature of the composition immediately after the entry into the die 10 is, for example, preferably installed within 20 mm upstream or downstream of the inlet of the die 10 along the extruding direction.

In the present production method, the temperature of the die 10 ranges preferably from the melting point of the resin mixture plus 40°C to the melting point plus 100°C, more preferably from the melting point of the resin mixture plus 50°C to the melting point plus 100°C, more preferably from the melting point of the resin mixture plus 50°C to the melting point plus 90°C, even more preferably from the melting point of the resin mixture plus 50°C to the melting point plus 80°C, and particularly preferably from the melting point of the resin mixture plus 50°C to the melting point plus 70°C. This configuration offers the advantage that the temperature of the composition inside the die 10 is easily adjusted to be a temperature at which the pressure of the composition inside the die 10 is easily kept within a suitable range (e.g., high pressure).

In the present specification, the temperature of the die 10 is intended to mean a temperature indicated by a thermocouple installed at a position 35 mm away from the outer surface of the die 10 in depth.

In the extruding step, the composition is extruded to a region which has a lower pressure than the extruder and which is a liquid phase. The liquid phase of the region is not particularly limited, but is preferably water because water can be inexpensively and safely produced.

The temperature of the region is 40°C to 90°C, preferably 60°C to 90°C, more preferably 60°C to 85°C, even more preferably 60°C to 80°C, and particularly preferably 60°C to 70°C. This configuration offers the advantages that (a) it is possible to stably control the temperature of the composition immediately after entry into the die 10 and (b) the solidification preparation time is easily adjusted to be within a preferable range. The temperature of the region being not more than 90°C offers the advantage that extruded foamed particles which include a small number of extruded foamed particles adhering to each other are easily obtained. In the present specification, the "temperature of the region" also refer to the "temperature of the liquid phase". In the present specification, the temperature of the region can be measured by a thermometer which is installed so as to be in contact with the liquid phase.

The pressure of the liquid phase on the composition inside the region is preferably 0.05 MPa·G to 0.60 MPa·G, more preferably 0.07 MPa·G to 0.55 MPa·G, even more preferably 0.10 MPa·G to 0.50 MPa·G, and particularly preferably 0.10 MPa·G to 0.45 MPa·G. This configuration offers the advantage that the adhesion of extruded foamed particles obtained to each other is easily kept down. In the present specification, the expression "MPa·G" is intended to mean that MPa represents a gage pressure.

(2-6. Granulating step)

The composition extruded through the die 10 to a region which has a lower pressure than the extruder and which is a liquid phase starts foaming after the elapse of the foaming preparation time. In the granulating step, the composition before foaming or the composition which is being foamed may be granulated, or the composition which has finished foaming may be granulated. In a case where the composition before foaming or the composition which is being foamed is granulated, the composition granulated can finish foaming in the region. The granulating step can refer to a step of granulating the composition into particulates to prepare the polypropylene-based resin extruded foamed particles. In the present production method, the composition granulated is cooled in the region while being foaming or after foaming, and starts solidifying after completion of the expansion.

A method for granulating the composition extruded through the die 10 is not particularly limited. Examples of the method encompass a method of granulating the composition with use of a cutter or the like which is provided to follow the die 10 along the extruding direction.

(2-7. Step of obtaining polypropylene-based resin extruded foamed particles)

A step of obtaining polypropylene-based resin extruded foamed particles can refer to a step of collecting the polypropylene-based resin extruded foamed particles prepared in the granulating step.

A method for collecting the polypropylene-based resin extruded foamed particles is not particularly limited. Examples of a method for collecting the polypropylene-based resin extruded foamed particles encompass centrifugal dehydration.

[3. Polypropylene-based resin extruded foamed particles]

In the present specification, the "polypropylene-based resin extruded foamed particles obtained by the present production method" can be referred to as the "present extruded foamed particles".

The present extruded foamed particles has a melting point during the second temperature increase of differential scanning calorimetry, the melting point being, for example, preferably 130°C to 165°C, more preferably 135°C to 164°C, even more preferably 138°C to 163°C, particularly preferably 140°C to 162°C, even particularly preferably not less than 141°C and less than 153.8°C, even particularly preferably not less than 141°C and not more than 153.5°C, and most preferably not less than 142°C and not more than 153.0°C. The melting point may be, for example, not less than 130°C and less than 153.8°C.

Examples of a method for measuring the melting point of the present extruded foamed particles during the second temperature increase encompass a method of carrying out the following (1) to (3) in sequence: (1) the temperature of 5 mg to 6 mg of the extruded foamed particles are increased from 40°C to 300°C at a temperature increase rate of 10°C/minute with use of a differential scanning calorimeter DSC (e.g., DSC6200 type manufactured by Seiko Instruments Inc.) so that the extruded foamed particles are melted; (2) thereafter, the temperature of a resin obtained is decreased from 300°C to 40°C at a temperature decrease rate of 10°C/minute so that the resin is crystallized; and (3) thereafter, the temperature of the resin crystallized is further increased from 40°C to 300°C at a temperature increase rate of 10°C/minute. A DSC curve obtained during the temperature increase in (3) described above is considered the DSC curve obtained during the second temperature increase. A peak temperature corresponding to the melting peak indicated by the DSC curve obtained during the second temperature increase is considered the "melting point during second temperature increase" of the extruded foamed particles.

(Moldability)

The present extruded foamed particles have the advantage of being excellent in moldability, which is specifically the advantage that an in-mold expanded product obtained has a high 50% compressive strength.

The 50% compressive strength of an in-mold expanded product is measured by the following method: (1) a mold which is 381 mm in length, 381 mm in width, and 60 mm in thickness is provided with an 18 mm-crash gap in a mold, and the mold is filled with polypropylene-based resin extruded foamed particles; (2) in-mold expansion molding of the polypropylene-based resin extruded foamed particles is carried out under a steam pressure of the in-mold expansion molding of 0.26 MPa·G, so that an in-mold expanded product is obtained; (3) a specimen is cut from the in-mold expanded product obtained, the specimen being 50 mm in length, 50 mm in width, and 50 mm in thickness. Note that, in relation to surfaces perpendicular to the thickness direction of the in-mold expanded product, only one of the surfaces is subjected to the cutting. This means that the other of the surfaces perpendicular to the thickness direction of the in-mold expanded product, which is not subjected to the cutting, is the surface (also referred to as a skin layer) that had been in contact with the mold during the in-mold expansion molding; and (4) the value of the compressive stress at 50% compression of the specimen is measured as the specimen is compressed at a rate of 10% of the thickness per unit time (approximately 5 mm/minute), with use of a tension and compression testing machine (e.g., TG-50kN manufactured by MinebeaMitsumi Inc.), in compliance with ISO 844. A value thereby obtained is considered the 50% compressive strength (MPa) of the in-mold expanded product. When the 50% compressive strength of an in-mold expanded product is higher, the in-mold expanded product has more excellent moldability.

The 50% compressive strength of an in-mold expanded product obtained from the present extruded foamed particles is preferably greater than an evaluation standard value (X) calculated on the basis of Formula (1), more preferably not less than 1.04 times X, and even more preferably not less than 1.08 times X. The extruded foamed particles that provide an in-mold expanded product having a 50% compressive strength greater than the evaluation standard value (X) are excellent in moldability and excellent in fusibility. It is therefore possible to obtain an in-mold expanded product excellent in compressive strength and excellent in fusibility, by molding (e.g., in-mold expansion molding) the present extruded foamed particles.

$$\text{Evaluation standard value (X) [MPa]} = (0.0000056 \times D^3 + 0.062 \times D^2 - 0.0302 \times D - 20)/1000 \qquad (1)$$

In Formula (1), D is the density (g/L) of the specimen. The density of the specimen is considered a value obtained by measuring the weight W (g) of the specimen and dividing the measured weight W (g) by the volume V (0.125 L) of the specimen (length/width/thickness = 50/50/50 mm).

(Expansion ratio)

The present extruded foamed particles can exhibit an expansion ratio which is as high as preferably 3 times to 24 times. The expansion ratio of the present extruded foamed particles is more preferably 3 times to 15 times, and even more preferably 3 times to 9 times. This configuration offers the advantage that a polypropylene-based resin in-mold expanded product obtained with use of the extruded foamed particles exhibits, to a greater degree, characteristics such as the property of being formed in any shape, shock-absorbing properties, lightweight properties, and heat insulating properties.

In the present specification, the expansion ratio of the polypropylene-based resin extruded foamed particles is calculated by the following method: (1) the weight w (g) of extruded foamed particles is measured; (2) subsequently, the extruded foamed particles used in the weight measurement are submerged in ethanol contained in a graduated cylinder, and the volume v (cm$^3$) of the extruded foamed particles is measured on the basis of the amount of increase in the liquid level of the graduated cylinder; (3) the weight w (g) is divided by the volume v (cm$^3$) and the density $\rho_1$ of the extruded foamed particles is thereby calculated; (4) by carrying out operations the same as (1) to (3) with use of a base resin instead of the extruded foamed particles, the density $\rho_2$ of the base resin is calculated; and (5) the density $\rho_2$ of the base resin of the extruded foamed particles is divided ($\rho_2/\rho_1$) by the density $\rho_1$ of the extruded foamed particles, and a value thereby obtained is considered the expansion ratio.

In the present specification, the base resin can also refer to a resin component which substantially constitutes the extruded foamed particles. The density of the base resin of the extruded foamed particles is not substantially changed even by an operation in which the extruded foamed particles are melted under reduced pressure to be reverted to a lump of resin. Therefore, the density of the lump of resin obtained by melting the extruded foamed particles under reduced pressure can be regarded as the density of the base resin of the extruded foamed particles. In the present specification, the operation of melting the extruded foamed particles under reduced pressure to obtain a lump of resin can be referred to as "reversion-to-resin", and the lump of resin obtained by the reversion-to-resin can be referred to as a "reversion resin".

A specific method for the reversion-to-resin is not particularly limited, but examples thereof encompass a method of carrying out the following steps (b1) to (b5) in sequence: (b1) extruded foamed particles are put in a dryer having a temperature adjusted to be the melting point of a linear polypropylene-based resin plus 10°C; (b2) subsequently, the pressure inside the dryer is reduced to - 0.05 MPa (gage pressure) to -0.10 MPa (gage pressure) over 5 minutes to 10 minutes with use of a vacuum pump; (b3) thereafter, the extruded foamed particles are left to stand in the dryer for 30 minutes for preparation of a lump of resin (reversion resin); (b4) subsequently, the temperature inside the dryer is decreased to room temperature, and the pressure inside the dryer is then returned to normal pressure; and (b5) thereafter, the lump of resin is taken out of the dryer.

[4. Polypropylene-based resin in-mold expanded product production method]

A polypropylene-based resin in-mold expanded product production method in accordance with an embodiment of the present invention includes a heating step of filling a molding space with polypropylene-based resin extruded foamed particles and then heating the polypropylene-based resin extruded foamed particles inside the molding space, the polypropylene-based resin extruded foamed particles being obtained by the production method described in the section [2. Method for producing polypropylene-based resin extruded foamed particles] or being the polypropylene-based resin extruded foamed particles described in the section [3. Polypropylene-based resin extruded foamed particles], the molding space which being formed by at least two mold parts included in a mold.

In the present specification, the "polypropylene-based resin in-mold expanded product in accordance with an embodiment of the present invention" can be referred to as the "present in-mold expanded product". An in-mold expanded product obtained by production with use of a mold can be referred to as an in-mold in-mold expanded product.

The polypropylene-based resin in-mold expanded product production method in accordance with an embodiment of the present invention, which has the above-described configuration, offers the advantage that it is possible to provide a polypropylene-based resin in-mold in-mold expanded product excellent in compressive strength.

The present in-mold expanded product has a 50% compressive strength which is preferably greater than an evaluation standard value (X) calculated on the basis of Formula (1) described above, more preferably not less than 1.04 times X, and even more preferably not less than 1.08 times X. The 50% compressive strength of the in-mold expanded product being greater than the evaluation standard value (X) offers the advantage that the in-mold expanded product is excellent not only in strength but also in fusibility.

A mold for use in the polypropylene-based resin in-mold expanded product production method in accordance with an embodiment of the present invention is not particularly limited. The mold can include at least two mold parts which are, for example, a fixed mold part that cannot be driven and a movable mold part that can be driven. A molding space is formed in the insides of the fixed mold part and the movable mold part, by causing the movable mold part to approach the fixed mold part. Note that, in heating the extruded foamed particles in the molding space, a mold frame of the fixed mold part can be in contact with a mold frame of the movable mold part (i.e., the mold can be sealed). In contrast, in filling the molding space with the extruded foamed particles, the mold frame of the fixed mold part and the mold frame of the movable mold part may be out of contact with each other, and a small gap (also referred to as a crash gap in a mold) may be formed between the mold frames of the fixed mold part and the movable mold part.

In the polypropylene-based resin in-mold expanded product production method in accordance with an embodiment of the present invention, a method for filling the molding space with polypropylene-based resin extruded foamed particles and a method for heating the polypropylene-based resin extruded foamed particles in the mold are not particularly limited. Examples of these methods encompass the following methods (b1) to (b4).

(b1) Extruded foamed particles are pressurized with inorganic gas in a container, and the extruded foamed particles are impregnated with the inorganic gas, and the extruded foamed particles are caused to have a predetermined inner pressure. Thereafter, a molding space of a mold is filled with the extruded foamed particles, and the extruded foamed particles in the molding space are heated with steam.

(b2) A molding space of a mold is filled with extruded foamed particles. Subsequently, the extruded foamed particles in the molding space are compressed such that the volume of the molding space is reduced by 10% to 75%, and the extruded foamed particles in the molding space are then heated with steam.

(b3) Extruded foamed particles are compressed with gas pressure and a molding space of a mold is filled with the extruded foamed particles. Subsequently, resilience of the extruded foamed particles in the molding space is utilized, and the extruded foamed particles in the molding space are heated with steam.

(b4) A molding space of a mold is filled with extruded foamed particles which have not been particularly pretreated. Subsequently, the extruded foamed particles in the molding space are heated with steam.

The heating step preferably includes a step of heating the polypropylene-based resin extruded foamed particles with steam.

In the polypropylene-based resin in-mold expanded product production method in accordance with an embodiment of the present invention, the pressure (which can hereinafter be referred to as a steam pressure) of the steam with which the extruded foamed particles are heated varies according to, for example, the characteristics of the extruded foamed particles used, and cannot be specified in general.

In the method (b1), at least one selected from the group consisting of air, nitrogen, oxygen, carbon dioxide, helium, neon, argon, and the like can be used as the inorganic gas. Among these inorganic gases, air and/or carbon dioxide are preferable.

The inner pressure of the foamed particles in the method (b1) is preferably 0.05 MPa to 0.30 MPa (gage pressure) and preferably 0.06 MPa to 0.25 MPa (gage pressure).

In the method (b1), a temperature inside the container at the time of the impregnation of the foamed particles with the inorganic gas is preferably 10°C to 90°C, and more preferably 40°C to 90°C.

An embodiment of the present invention may have the following configurations.

<1> A method for producing polypropylene-based resin extruded foamed particles, the method including: a melt-kneading step of melt-kneading, with use of an extruder provided with a die, a composition that includes a blowing agent and a resin mixture which includes a polypropylene-based resin with a branched structure; an extruding step of extruding the composition through the die to a region which has a lower pressure than the extruder has and which is a liquid phase; a granulating step of granulating the composition in the region; and a step of obtaining polypropylene-based resin extruded foamed particles, the blowing agent being carbon dioxide, the region having a temperature of 40°C to 90°C, the composition having a pressure of not less than 14.5 MPa and not more than 35.0 MPa at an inlet of the die; and the composition being discharged in an amount of more than 2.5 kg/hr and not more than 5.0 kg/hr for each of holes of the die.

<2> The method described in <1>, in which the composition has a temperature ranging from a melting point of the resin mixture plus 0°C to the melting point plus 40°C immediately after entry into the die.

<3> The method described in <1>, in which the composition has a temperature ranging from a melting point of the resin mixture plus 10°C to the melting point plus 40°C immediately after entry into the die.

<4> The method described in any one of <1> to <3>, in which the die has a temperature ranging from a melting point of the resin mixture plus 40°C to the melting point plus 100°C.

<5> The method described in any one of <1> to <4>, in which the holes of the die have a diameter of not less than 0.3 mm and less than 1.0 mm.

<6> The method described in any one of <1> to <5>, in which the region has a temperature of 60°C to 90°C.

<7> The method described in any one of <1> to <6>, in which the polypropylene-based resin extruded foamed particles have an expansion ratio of 3 times to 24 times.

<8> The method described in any one of <1> to <7>, in which the polypropylene-based resin with a branched structure is obtained by melt-kneading a mixture that includes a linear polypropylene-based resin, a conjugated diene-based compound, and a radical polymerization initiator.

<9> The method described in any one of <1> to <8>, in which the polypropylene-based resin with a branched structure has a loss tangent tan $\delta$ of not more than 4 at 200°C and at 0.1 rad/s.

<10> The method described in any one of <1> to <9>, in which the polypropylene-based resin with a branched structure has an MFR of 0.5 g/10 minutes to 20.0 g/10 minutes at 230°C.

<11> The method described in any one of <1> to <10>, in which the polypropylene-based resin with a branched structure has a melt tension of 3 cN to 20 cN at 200°C.

<12> The method described in any one of <1> to <11>, in which the resin mixture has a melting point of 130°C to 165°C.

<13> The method described in any one of <1> to <12>, in which the blowing agent is used in an amount of 0.5 parts by weight to 7.0 parts by weight relative to 100.0 parts by weight of the resin mixture.

<14> The method described in any one of <1> to <13>, in which the polypropylene-based resin with a branched structure has a main chain which is at least one selected from the group consisting of a propylene homopolymer, a polypropylene-based block copolymer, and a polypropylene-based random copolymer.

<15> The method described in any one of <1> to <14>, in which: the extruder includes a cooling section; the cooling section includes a cooling member; and the cooling member is at least one selected from the group consisting of a single screw extruder, a static mixer, and a melt cooler.

<16> The method described in any one of <1> to <15>, in which: the die includes a land portion; and the land portion has a length of 0.5 mm to 5.5 mm.

<17> The method described in any one of <1> to <16>, in which a pressure of the liquid phase on the composition in the region is 0.05 MPa·G to 0.60 MPa·G.

<18> The method described in any one of <1> to <17>, in which the polypropylene-based resin extruded foamed particles has a melting point during the second temperature increase of differential scanning calorimetry, the melting point being not less than 130°C and less than 153.8°C.

<19> A method for producing a polypropylene-based resin in-mold expanded product, the method including a heating step of filling a molding space with polypropylene-based resin extruded foamed particles and heating the polypropylene-based resin extruded foamed particles inside the molding space, the molding space being formed by at least two mold parts included in a mold, the polypropylene-based resin extruded foamed particles being obtained by the method described in any one of <1> to <18>.

<20> The method described in <14>, in which the polypropylene-based resin in-mold expanded product has a 50% compressive strength which is greater than an evaluation standard value (X) calculated from Formula (1) below: the 50% compressive strength being a value of a compressive stress at 50% compression, the value being measured as the polypropylene-based resin in-mold expanded product is compressed at a rate of 10% of a thickness of the polypropylene-based resin in-mold expanded product per unit time, in compliance with ISO 844, with use of a tension and compression testing machine, Formula (1) being expressed as follows: evaluation standard value (X) [MPa] = $(0.0000056 \times D^3 + 0.062 \times D^2 - 0.0302 \times D - 20) / 1000$, where D represents a density (g/L) of the polypropylene-based resin in-mold expanded product, the density of the polypropylene-based resin in-mold expanded product being obtained by measuring a weight W (g) of the polypropylene-based resin in-mold expanded product and dividing, by a volume V of the polypropylene-based resin in-mold expanded product, the weight W (g) having been measured.

Examples

An embodiment of the present invention will be described below in more detail through Examples. Note, however, that the present invention is not limited to such Examples.

(Measuring method and evaluating method)

[Melting point]

The melting point of the resin mixture is measured through the DSC method, by carrying out the following method: (1) the temperature of 5 mg to 6 mg of the resin mixture was increased from 40°C to 220°C at a temperature increase rate of 10°C/minute so that the resin mixture was melted; (2) thereafter, the temperature of the resin mixture melted was decreased from 220°C to 40°C at a temperature decrease rate of 10°C/min so that the resin mixture was crystallized; and (3) thereafter, the temperature of the resin mixture crystallized was further increased from 40°C to 220°C at a temperature increase rate of 10°C/min. The temperature corresponding to the peak (melting peak) of a DSC curve of the resin mixture, the DSC curve being obtained in the second temperature increase (i.e., in (3)), was considered the melting point of the resin mixture. Note that, in a case where as a result of carrying out the above-described method, there was more than one peak (melting peak) in the DSC curve, obtained in the second temperature increase, of the resin mixture, the temperature corresponding to a peak (melting peak) at which the quantity of melting heat was the greatest was considered the melting point of the resin mixture. As a differential scanning calorimeter, DSC6200 type manufactured by Seiko Instruments Inc. was used.

[MFR of branched polypropylene-based resin at 230°C]

The MFR of the branched polypropylene-based resin was measured with use of an MFR measuring instrument described in JIS K7210 under the following conditions: the diameter of an orifice was 2.0959 ± 0.0050 mmφ, the length of the orifice was 8.000 ± 0.025 mm, the load was 2160 g, and the temperature was 230 ± 0.2°C.

[Expansion ratio]

The expansion ratio of the polypropylene-based resin extruded foamed particles was calculated by the following method: (1) the weight w (g) of extruded foamed particles was measured; (2) subsequently, the extruded foamed particles used in the weight measurement were submerged in ethanol contained in a graduated cylinder, and the volume v ($cm^3$) of the extruded foamed particles was measured on the basis of the amount of increase in the liquid level of the graduated cylinder; (3) the weight w (g) was divided by the volume v ($cm^3$) and the density $\rho_1$ of the extruded foamed particles was thereby calculated; (4) by carrying out operations the same as (1) to (3) with use of the base resin (reversion resin) instead of the extruded foamed particles, the density $\rho_2$ of the base resin was calculated; and (5) the density $\rho_2$ of the base resin of the extruded foamed particles was divided ($\rho_2/\rho_1$) by the density $\rho_1$ of the extruded foamed particles, and a value thereby obtained was considered the expansion ratio.

In Examples and Comparative Examples, the density of the lump of resin obtained by reversion-to-resin of the extruded foamed particles was regarded as the density of the base resin. The following (b1) to (b5) were carried out in sequence, and a lump of resin obtained was used as a reversion resin of the extruded foamed particles: (b1) extruded foamed particles were put in a dryer having a temperature adjusted to be 160°C; (b2) subsequently, the pressure inside the dryer was reduced to -0.05 MPa (gage pressure) to -0.10 MPa (gage pressure) over 5 minutes to 10 minutes with use of a vacuum pump; (b3) thereafter, the extruded foamed particles were left to stand in the dryer for 30 minutes for preparation of a lump of resin (reversion resin); (b4) subsequently, the temperature inside the dryer was decreased to room temperature, and the pressure inside the dryer was then returned to normal pressure; and (b5) thereafter, the lump of resin was taken out of the dryer.

[Loss tangent tan δ at 200°C at 0.1 rad/s]

The loss tangent tan δ (loss modulus G" / storage modulus G') of the branched polypropylene-based resin was measured in a vibration experiment by the following method: (1) a sample resin (branched polypropylene-based resin) for measurement was sandwiched between two parallel plates (gap: 1 mm); (2) periodic strain generated by vibration was applied to the sample resin between the plates by driving one of the plates; and (3) from the waveforms of shearing stress generated in response to the strain applied and a phase difference between the respective waveforms of the stress and the strain, the storage modulus G', the loss modulus G'', and thee loss tangent tan δ were determined. The vibration experiment was carried out with use of a rotational rheometer (manufactured by TA Instruments, product name: ARES), in a nitrogen atmosphere, at a measurement temperature of 200°C, and at a measurement angular frequency of 0.1 rad/s.

[Melt tension at 200°C]

The melt tension of a branched polypropylene-based resin used in each of Examples and Comparative Examples was measured with use of Capilograph 1D (manufactured by TOYO SEIKI SEISAKU-SHO, LTD, Japan). The details of the measurement are the following (1) to (5): (1) a barrel having a diameter of 9.55 mm that had been heated to 200°C was filled with a branched polypropylene-based resin used in each of Examples and Comparative Examples; (2) subsequently, the branched polypropylene-based resin was heated for 10 minutes within the barrel, which had been heated to 200°C; (3) subsequently, while the branched polypropylene-based resin was discharged in the form of a strand through a capillary die (opening diameter: 1.0 mm, length: 10 mm) at a piston lowering speed (10 mm/minutes) which was kept constant, this strand-like resin was passed through a tension detecting pulley located 350 mm below the capillary die, and thereafter, take-up of the strand-like resin with use of a take-up roll was started; (4) after the drawing of the strand-like resin became stable, the speed at which the strand-like resin was taken up was increased from an initial speed of 1.0 m/minute to a speed of 200 m/minute at a constant rate for 4 minutes; (5) a load acting on the pulley, which was equipped with a load cell, at a point in time when the strand-like resin fractures was measured as the melt tension.

[Moldability]

The moldability was evaluated through measurement of the 50% compressive strength of an in-mold expanded product, by carrying out the following method: (1) a mold which was 381 mm in length, 381 mm in width, and 60 mm in thickness was provided with an 18 mm-crash gap in a mold, and the mold was filled with polypropylene-based resin extruded foamed particles; (2) in-mold expansion molding of the polypropylene-based resin extruded foamed particles was carried out under a steam pressure of the in-mold expansion molding of 0.26 MPa-G, so that an in-mold expanded product was obtained; (3) a specimen was cut from the in-mold expanded product obtained, the specimen being 50 mm in length, 50 mm in width, and 50 mm in thickness. Note that, in relation to surfaces perpendicular to the thickness direction of the in-mold expanded product, only one of the surfaces was subjected to the cutting. This means that the other of surfaces perpendicular to the thickness direction of the in-mold expanded product, which was not subjected to the cutting, was the surface (also referred to as a skin layer) that had been in contact with the mold during the in-mold expansion molding; and (4) the value of the compressive stress at 50% compression of the specimen was measured as the specimen was compressed at a rate of 10% of the thickness per unit time (approximately 5 mm/minute), with use of a tension and compression testing machine (TG-50kN manufactured by MinebeaMitsumi Inc.), in compliance with ISO 844. A value thereby obtained was considered the 50% compressive strength of the in-mold expanded product.
When the 50% compressive strength of the in-mold expanded product was greater than an evaluation standard value (X) calculated by Formula (1) below, the moldability was evaluated to be good. When the 50% compressive strength of the in-mold expanded product was equal to or smaller than the evaluation standard value (X), the moldability was evaluated to be poor.

$$\text{Evaluation standard value (X) [MPa]} = (0.0000056 \times D^3 + 0.062 \times D^2 - 0.0302 \times D - 20)/1000 \tag{1}$$

In Formula (1), D is the density (g/L) of the specimen. The density of the specimen was considered a value obtained by measuring the weight W (g) of the specimen and dividing the measured weight W (g) by the volume V (0.125 L) of the specimen (length/width/thickness = 50/50/50 mm).

(Branched polypropylene-based resin)

As branched polypropylene-based resins, resins 1 to 4 were prepared.
The resin 1 was produced by carrying out the following (1) to (5) in sequence: (1) 100 parts by weight of a random polypropylene resin (F-724NPC manufactured by Prime Polymer Co., Ltd., loss tangent tan $\delta$: 6.8) serving as a linear polypropylene-based resin and 1.0 part by weight of a radical polymerization initiator were fed at 70 kg/h to a twin screw extruder having a screw diameter $\varphi$ of 45 mm; (2) from an injection portion provided in the middle part of the twin screw extruder, 0.4 parts by weight of isoprene, relative to 100 parts by weight of the linear polypropylene-based resin, was fed as a conjugated diene-based compound; (3) a mixture in the twin screw extruder was melt-kneaded at a cylinder temperature of 200°C and at a screw rotation speed of 230 rpm; (4) a melt-kneaded product was extruded through a die provided at an end of the twin screw extruder, and the melt-kneaded product extruded (strand) was cooled in a water tank; and (5) the strand was granulated with use of a pelletizer provided downstream of the water tank. The resin 1 was thus obtained. The MFR at 230°C of the resin 1 obtained was 3.0 g/10 minutes. As the radical polymerization initiator, t-butylperoxy isopropyl monocarbonate (PBI) was used. The loss tangent tan $\delta$ at 200°C at 0.1 rad/s of the resin 1 obtained was 1.1, which was lower than the loss tangent tan $\delta$ of the random polypropylene resin (F-724NPC), which was used as the linear polypropylene-based resin.

The resin 2 was produced in the same manner as was the resin 1, except that F227D (loss tangent tan $\delta$: 7.0) manufactured by Prime Polymer Co., Ltd. was used as the random polypropylene resin serving as the linear polypropylene-based resin, and the amount of the conjugated diene-based compound was 0.3 parts by weight relative to 100 parts by weight of the linear polypropylene-based resin. The MFR at 230°C of the resin 2 obtained was 3.0 g/10 minutes. The loss tangent tan $\delta$ at 200°C at 0.1 rad/s of the resin 2 obtained was 1.1, which was lower than the loss tangent tan $\delta$ of the random polypropylene resin (F227D), which was used as the linear polypropylene-based resin.

The resin 3 was produced in the same manner as was the resin 1, except that: a mixture of 2,2-di-t-butylperoxybutane (DT50) and t-butylperoxy isopropyl monocarbonate (PBI) in a mixture ratio of DT50/PBI = 1/2 was used as the radical polymerization initiator; and relative to 100 parts by weight of the linear polypropylene-based resin, the amount of the radical polymerization initiator was 1.32 parts by weight and the amount of the conjugated diene-based compound was 0.50 parts by weight. The MFR at 230°C and melt tension at 200°C of the resin 3 obtained were 6.1 g/ 10 minutes and 9.8 cN, respectively. The loss tangent tan $\delta$ at 200°C at 0.1 rad/s of the resin 3 obtained was not more than 5, which was lower than the loss tangent tan $\delta$ of the random polypropylene resin (F-724NPC), which was used as the linear polypropylene-based resin.

The resin 4 was produced in the same manner as was the resin 1, except that: a DT50-PBI mixture the mixture ratio of which was DT50/PBI = 1/2 was used as the radical polymerization initiator; and relative to 100 parts by weight of the linear polypropylene-based resin, the amount of the radical polymerization initiator was 1.33 parts by weight and the amount of the conjugated diene-based compound was 0.55 parts by weight. The MFR at 230°C and melt tension at 200°C of the resin 4 obtained were 3.8 g/10 minutes and 10.6 cN, respectively. The loss tangent tan $\delta$ at 200°C at 0.1 rad/s of the resin 4 obtained was not more than 5, which was lower than the loss tangent tan $\delta$ of the random polypropylene resin (F-724NPC), which was used as the linear polypropylene-based resin.

(Carbon masterbatch having carbon concentration of 40 weight%)

A carbon masterbatch having a carbon concentration of 40 weight% was prepared as follows: the carbon masterbatch was prepared by blending carbon black into WB140HMS manufactured by Borealis such that the concentration of carbon black was 40 weight%, melt-kneading the blend in an extruder, and extruding a melt-kneaded product obtained into water and then cutting the extruded product.

(Resin mixture)

As the resin mixture, resin mixtures 1 to 3 were prepared.

The resin mixture 1 was prepared by blending together 75.55 parts by weight of the resin 1, 20 parts by weight of the resin 2, 4.25 parts by weight of the carbon masterbatch having a carbon concentration of 40 weight%, and 0.2 parts by weight of talc serving as the cell nucleating agent. The melting point of the resin mixture 1 was 146.6°C.

The resin mixture 2 was prepared by blending together 95.55 parts by weight of the resin 3, 4.25 parts by weight of the carbon masterbatch having a carbon concentration of 40 weight%, and 0.2 parts by weight of talc serving as the cell nucleating agent. The melting point of the resin mixture 2 was 147.5°C.

The resin mixture 3 was prepared by blending together 95.55 parts by weight of the resin 4, 4.25 parts by weight of the carbon masterbatch having a carbon concentration of 40 weight%, and 0.2 parts by weight of talc serving as the cell nucleating agent. The melting point of the resin mixture 3 was 147.8°C.

(Extruder)

In Examples and Comparative Examples below, used as the extruder for use in the production of the polypropylene-based resin extruded foamed particles was a device including a kneading device, a first transporting section, a cooling section, a second transporting section, a diverter valve (DV), and a granulating section provided with a die were connected in series in this order. As the kneading device, a twin screw extruder was used. As the first and second transporting sections, gear pumps were used. As the cooling section, a melt cooler was used. Used as the die was a die (a) having holes each of which had a perfect circular shape and each of which had a diameter of 0.8 mm or 0.6 mm, the die including a land portion which had a cylindrical flow channel and which had a length of 3.8 mm, the number of the holes being three or six. As the granulating section, a granulating section including a cutter and a cutter case filled with a liquid phase (water) was used.

(Example 1)

Used as the extruder was an extruder provided with a die having holes each of which had a diameter of 0.8 mm and the number of which was three. As the resin mixture, the resin mixture 1 was used. Extruded foamed particles were produced by the following method:

The resin mixture was introduced from the raw material feeding device into the twin screw extruder at 10.0 kg/h, and melt-kneading of the resin mixture was started, with a barrel temperature being 200°C and a screw rotation speed being 170 rpm. In the middle of the melt-kneading of the resin mixture, 2.5 parts by weight of carbon dioxide relative to 100 parts by weight of the resin mixture was injected as the blowing agent into the twin screw extruder, so that a composition was prepared. The composition melt-kneaded was passed through the first transporting section (set temperature: 170°C), the cooling section, the second transporting section, and the diverter valve (set temperature of the cooling section to DV: 157°C) in this order (melt-kneading step).

The composition having passed through the diverter valve was caused to enter the die (temperature of the die: 199°C). At the inlet of the die, the pressure of the composition was 19.7 MPa. The temperature of the composition immediately after the entry into the die was 166°C. Note that the thermometer for measuring the temperature of the composition immediately after the entry into the die was installed 10 mm upstream of the inlet of the die along the extruding direction. The composition was passed through the land portion and extruded into a liquid phase (the temperature of the liquid phase (water temperature): 80°C, the pressure of the liquid phase (water pressure): 0.2 MPa) such that the total amount of the composition discharged was 10 kg/hr and the amount of the composition discharged for each hole was 3.3 kg/hr (extruding step). The composition extruded was cut in the liquid phase with use of a cutter (rotation speed: 4,200 rpm) (granulating step). The composition cut was foamed and cooled, so that polypropylene-based resin extruded foamed particles were obtained (a step of obtaining polypropylene-based resin extruded foamed particles). The expansion ratio of the polypropylene-based resin extruded foamed particles obtained was measured. Further, a specimen was prepared and the 50% compressive strength was measured. The production conditions and the measurement results are shown in Table 1. Note that the pressure of the composition and the pressure of the liquid phase (water pressure) were expressed in gage pressure.

(Example 2)

Polypropylene-based resin extruded foamed particles were obtained by the same method as in Example 1, except that the production conditions were changed as shown in Table 1. The pressure of the composition at the inlet of the die was 20.3 MPa, and the temperature of the composition immediately after entry into the die was 169°C. The expansion ratio of the polypropylene-based resin extruded foamed particles obtained was measured. Further, a specimen was prepared and the 50% compressive strength was measured. The production conditions and the measurement results are shown in Table 1.

(Example 3)

Polypropylene-based resin extruded foamed particles were obtained by the same production method as in Example 1, except that the production conditions were changed as shown in Table 1. The pressure of the composition at the inlet of the die was 18.6 MPa, and the temperature of the composition immediately after entry into the die was 173°C. The expansion ratio of the polypropylene-based resin extruded foamed particles obtained was measured. Further, a specimen was prepared and the 50% compressive strength was measured. The production conditions and the measurement results are shown in Table 1.

(Example 4)

Polypropylene-based resin extruded foamed particles were obtained in the same production method as in Example 1, except that the type of the resin mixture, the amount of carbon dioxide blended, the die, and the production conditions were changed as shown in Table 1, the screw rotation speed was changed to 116 rpm, and the cutter rotation speed was changed to 4,108 rpm. The pressure of the composition at the inlet of the die was 22.2 MPa, and the temperature of the composition immediately after entry into the die was 183°C. The expansion ratio of the polypropylene-based resin extruded foamed particles obtained was measured. Further, a specimen was prepared and the 50% compressive strength was measured. The production conditions and the measurement results are shown in Table 1.

(Comparative Example 1)

Polypropylene-based resin extruded foamed particles were obtained in the same production method as in Example 4, except that the die and the production conditions were changed as shown in Table 1, the screw rotation speed was changed to 120 rpm, and the cutter rotation speed was changed to 2,100 rpm. The pressure of the composition at the inlet of the die was 19.9 MPa, and the temperature of the composition immediately after entry into the die was 176°C. The expansion ratio of the polypropylene-based resin extruded foamed particles obtained was measured. Further, a specimen was prepared and the 50% compressive strength was measured. The production conditions and the measurement results are shown in Table 1.

(Example 5)

Polypropylene-based resin extruded foamed particles were obtained in the same production method as in Example 1, except that the type of the resin mixture, the amount of carbon dioxide blended, the die, and the production conditions were changed as shown in Table 1, the screw rotation speed was changed to 287 rpm, and the cutter rotation speed was changed to 3,767 rpm. The pressure of the composition at the inlet of the die was 14.7 MPa, and the temperature of the composition immediately after entry into the die was 169°C. The expansion ratio of the polypropylene-based resin extruded foamed particles obtained was measured. Further, a specimen was prepared and the 50% compressive strength was measured. The production conditions and the measurement results are shown in Table 1.

(Comparative Example 2)

Polypropylene-based resin extruded foamed particles were obtained in the same production method as in Example 5, except that the production conditions were changed as shown in Table 1, the screw rotation speed was changed to 160 rpm, and the cutter rotation speed was changed to 2,100 rpm. The pressure of the composition at the inlet of the die was 11.4 MPa, and the temperature of the composition immediately after entry into the die was 178°C. The expansion ratio of the polypropylene-based resin extruded foamed particles obtained was measured. Further, a specimen was prepared and the 50% compressive strength was measured. The production conditions and the measurement results are shown in Table 1.

(Comparative Example 3)

Polypropylene-based resin extruded foamed particles were obtained in the same production method as in Example 5, except that the production conditions were changed as shown in Table 1, the screw rotation speed was changed to 240 rpm, and the cutter rotation speed was changed to 3,150 rpm. The pressure of the composition at the inlet of the die was 14.1 MPa, and the temperature of the composition immediately after entry into the die was 175°C. The expansion ratio of the polypropylene-based resin extruded foamed particles obtained was measured. Further, a specimen was prepared and the 50% compressive strength was measured. The production conditions and the measurement results are shown in Table 1.

(Example 6)

Polypropylene-based resin extruded foamed particles were obtained by the same production method as in Example 1, except that the type of the resin mixture, the amount of carbon dioxide blended, and the production conditions were changed as shown in Table 1. The pressure of the composition at the inlet of the die was 23.4 MPa, and the temperature of the composition immediately after entry into the die was 160°C. The expansion ratio of the polypropylene-based resin extruded foamed particles obtained was measured. Further, a specimen was prepared and the 50% compressive strength was measured. The production conditions and the measurement results are shown in Table 1.

(Example 7)

Polypropylene-based resin extruded foamed particles were obtained by the same production method as in Example 1, except that the type of the resin mixture, the amount of carbon dioxide blended, and the production conditions were changed as shown in Table 1. The pressure of the composition at the inlet of the die was 17.3 MPa, and the temperature of the composition immediately after entry into the die was 163°C. The expansion ratio of the polypropylene-based resin extruded foamed particles obtained was measured. Further, a specimen was prepared and the 50% compressive strength was measured. The production conditions and the measurement results are shown in Table 1.

[Table 1]

(Table 1)

| Category | Parameter | Ex. 1 | Ex. 2 | Ex. 3 | Ex. 4 | Comparative Ex. 1 | Ex. 5 | Comparative Ex. 2 | Comparative Ex. 3 | Ex. 6 | Ex. 7 |
|---|---|---|---|---|---|---|---|---|---|---|---|
| Composition | Type of resin mixture | 1 | 1 | 1 | 1 | 2 | 2 | 2 | 2 | 3 | 3 |
| | Melting point of resin mixture [°C] | 146.6 | 146.6 | 146.6 | 146.6 | 147.5 | 147.5 | 147.5 | 147.5 | 147.8 | 147.8 |
| | Amount of carbon dioxide blended [Part by weight] | 2.5 | 2.5 | 2.5 | 2.5 | 2 | 2 | 2 | 2 | 3 | 3 |
| Die | Diameter of hole [mm] | 0.8 | 0.8 | 0.8 | 0.8 | 0.6 | 0.8 | 0.8 | 0.8 | 0.8 | 0.8 |
| | Number of holes | 3 | 3 | 3 | 3 | 6 | 6 | 6 | 6 | 3 | 3 |
| Production conditions | Total amount discharged [kg/hr] | 10.0 | 10.0 | 10.0 | 9.6 | 9.7 | 17.9 | 9.7 | 14.8 | 10.0 | 10.0 |
| | Amount discharged for each hole [kg/hr] | 3.3 | 3.3 | 3.3 | 3.2 | 1.6 | 3.0 | 1.6 | 2.5 | 3.3 | 3.3 |
| | Set temperature of cooling section to DV [°C] | 157 | 157 | 155 | 175 | 160 | 155 | 160 | 155 | 150 | 150 |
| | Temperature of die [°C] | 199 | 205 | 240 | 245 | 245 | 245 | 245 | 245 | 190 | 190 |
| | Water temperature [°C] | 80 | 80 | 80 | 80 | 80 | 80 | 80 | 80 | 40 | 80 |
| | Water pressure [MPa] | 0.20 | 0.15 | 0.15 | 0.12 | 0.10 | 0.10 | 0.05 | 0.10 | 0.15 | 0.30 |
| | Pressure of composition at inlet of die [MPa] | 19.7 | 20.3 | 18.6 | 22.2 | 19.9 | 14.7 | 11.4 | 14.1 | 23.4 | 17.3 |
| | Temperature of composition immediately after entry into die [°C] | 166 | 169 | 173 | 183 | 176 | 169 | 178 | 175 | 160 | 163 |
| Physical properties, etc. of foamed particles | Expansion ratio | 5.4 | 5.6 | 5.6 | 6.0 | 5.3 | 5.0 | 5.7 | 5.6 | 5.6 | 6.1 |
| | Density of specimen [g/L] | 165 | 157 | 155 | 134 | 138 | 150 | 137 | 139 | 139 | 133 |
| | 50% Compressive strength [MPa] | 1.82 | 1.73 | 1.71 | 1.2 | 1.08 | 1.4 | 0.99 | 1.08 | 1.24 | 1.14 |
| | Evaluation standard value (X) [MPa] | 1.69 | 1.53 | 1.49 | 1.10 | 1.17 | 1.39 | 1.15 | 1.19 | 1.19 | 1.09 |
| | Moldability | Good | Good | Good | Good | Poor | Good | Poor | Poor | Good | Good |

From Table 1, it is understood that the polypropylene-based resin extruded foamed particles of Examples 1 to 7 produced by the present production method exhibited good expansion ratios and exhibited 50% compressive strengths higher than the respective evaluation standard values (X), and were excellent in moldability. It has been therefore found that with the present production method, it is possible to provide polypropylene-based resin extruded foamed particles excellent in expansion ratio and moldability even under high-production conditions. In contrast, the polypropylene-based resin extruded foamed particles of Comparative Example 1, in which the amount discharged for each hole was not more than 2.5 kg/hr, and Comparative Example 2 and Comparative Example 3, in which the amounts discharged for each hole were not more than 2.5 kg/hr and the pressures of the compositions at the inlet of the die were less than 14.5 MPa, had 50% compressive strengths that were lower than the respective evaluation standard values (X) and were poor in moldability.

Industrial Applicability

With an embodiment of the present invention, it is possible to provide polypropylene-based resin extruded foamed particles excellent in moldability with high productivity. Thus, an embodiment of the present invention can suitably be used for obtaining a polypropylene-based resin in-mold expanded product having good physical properties in, for example, the property of being formed in any shape, shock-absorbing properties, lightweight properties, compressive strength, and heat insulating properties. Accordingly, an embodiment of the present invention can suitably be used in the fields of, for example, automotive interior materials, shock-absorbing materials, packaging materials, and heat insulating materials.

Reference Signs List

    10: Die
    11: Face
    12: Hole
    13: Resin passage
    14: Flow channel in land portion
    15: Land portion
    a: Length of land portion
    b: Diameter of hole

**Claims**

1.  A method for producing polypropylene-based resin extruded foamed particles, the method comprising:

        a melt-kneading step of melt-kneading, with use of an extruder provided with a die, a composition that includes a blowing agent and a resin mixture which includes a polypropylene-based resin with a branched structure;
        an extruding step of extruding the composition through the die to a region which has a lower pressure than the extruder has and which is a liquid phase;
        a granulating step of granulating the composition in the region; and
        a step of obtaining polypropylene-based resin extruded foamed particles,
        the blowing agent being carbon dioxide,
        **characterized in that** the region having a temperature of 40°C to 90°C,
        the composition having a pressure of not less than 14.5 MPa at an inlet of the die; and
        the composition being discharged in an amount of more than 2.5 kg/hr and not more than 5.0 kg/hr for each of holes of the die.

2.  The method according to claim 1, wherein
    the composition has a temperature ranging from a melting point of the resin mixture plus 0°C to the melting point plus 40°C immediately after entry into the die.

3.  The method according to claim 1, wherein
    the composition has a temperature ranging from a melting point of the resin mixture plus 10°C to the melting point plus 40°C immediately after entry into the die.

4.  The method according to any one of claims 1 to 3, wherein
    the die has a temperature ranging from a melting point of the resin mixture plus 40°C to the melting point plus 100°C.

5.  The method according to any one of claims 1 to 4, wherein

the holes of the die have a diameter of less than 1.0 mm.

6. The method according to any one of claims 1 to 5, wherein
the region has a temperature of 60°C to 90°C.

7. The method according to any one of claims 1 to 6, wherein
the polypropylene-based resin extruded foamed particles have an expansion ratio of 3 times to 24 times.

8. The method according to any one of claims 1 to 7, wherein
the polypropylene-based resin with a branched structure is a resin obtained by melt-kneading a mixture that includes a linear polypropylene-based resin, a conjugated diene-based compound, and a radical polymerization initiator.

9. The method according to any one of claims 1 to 8, wherein
the polypropylene-based resin with a branched structure has a loss tangent tan δ of not more than 4 at 200°C and at 0.1 rad/s.

10. The method according to any one of claims 1 to 9, wherein
the polypropylene-based resin with a branched structure has an MFR of 0.5 g/10 minutes to 20.0 g/10 minutes at 230°C.

11. The method according to any one of claims 1 to 10, wherein
the polypropylene-based resin with a branched structure has a melt tension of 3 cN to 20 cN at 200°C.

12. The method according to any one of claims 1 to 11, wherein
the resin mixture has a melting point of 130°C to 165°C.

13. The method according to any one of claims 1 to 12, wherein
the blowing agent is used in an amount of 0.5 parts by weight to 7.0 parts by weight relative to 100.0 parts by weight of the resin mixture.

14. A method for producing a polypropylene-based resin in-mold expanded product, the method comprising
a heating step of filling a molding space with polypropylene-based resin extruded foamed particles and heating the polypropylene-based resin extruded foamed particles inside the molding space, the molding space being formed by at least two mold parts included in a mold, the polypropylene-based resin extruded foamed particles being obtained by the method according to any one of claims 1 to 13.

15. The method according to claim 14, wherein
the polypropylene-based resin in-mold expanded product has a 50% compressive strength which is greater than an evaluation standard value (X) calculated from Formula (1) below:

the 50% compressive strength being a value of a compressive stress at 50% compression, the value being measured as the polypropylene-based resin in-mold expanded product is compressed at a rate of 10% of a thickness of the polypropylene-based resin in-mold expanded product per unit time, in compliance with ISO 844, with use of a tension and compression testing machine,
Formula (1) being expressed as follows:

evaluation standard value (X) [MPa] = $(0.0000056 \times D^3 + 0.062 \times D^2 - 0.0302 \times D - 20) / 1000$,

where D represents a density (g/L) of the polypropylene-based resin in-mold expanded product,
the density of the polypropylene-based resin in-mold expanded product being obtained by measuring a weight W (g) of the polypropylene-based resin in-mold expanded product and dividing, by a volume V of the polypropylene-based resin in-mold expanded product, the weight W (g) having been measured.

**Patentansprüche**

1. Ein Verfahren zur Herstellung von extrudierten geschäumten Partikeln aus Harz auf Polypropylenbasis, wobei das Verfahren umfasst:

einen Schmelzknetschritt des Schmelzknetens, unter Verwendung eines mit einer Düse versehenen Extruders, einer Zusammensetzung, die ein Treibmittel und ein Harzgemisch beinhaltet, das ein Harz auf Polypropylenbasis mit einer verzweigten Struktur beinhaltet;

einen Extrudierungsschritt des Extrudierens der Zusammensetzung durch die Düse in einen Bereich, der einen niedrigeren Druck als der Extruder aufweist und sich in einer flüssigen Phase befindet;

einen Granulierungsschritt des Granulierens der Zusammensetzung in dem Bereich; und

einen Schritt des Erhaltens von extrudierten geschäumten Partikeln aus Harz auf Polypropylenbasis,

wobei das Treibmittel Kohlendioxid ist,

**dadurch gekennzeichnet, dass** der Bereich eine Temperatur von 40°C bis 90°C aufweist,

die Zusammensetzung einen Druck von nicht weniger als 14,5 MPa an einem Einlass der Düse aufweist; und

die Zusammensetzung in einer Menge von mehr als 2,5 kg/h und nicht mehr als 5,0 kg/h für jedes der Löcher der Düse ausgetragen wird.

2. Das Verfahren nach Anspruch 1, wobei
die Zusammensetzung unmittelbar nach Eintritt in die Düse eine Temperatur im Bereich von einem Schmelzpunkt des Harzgemischs plus 0°C bis zu dem Schmelzpunkt plus 40°C aufweist.

3. Das Verfahren nach Anspruch 1, wobei
die Zusammensetzung unmittelbar nach Eintritt in die Düse eine Temperatur im Bereich von einem Schmelzpunkt des Harzgemischs plus 10°C bis zu dem Schmelzpunkt plus 40°C aufweist.

4. Das Verfahren nach einem der Ansprüche 1 bis 3, wobei
die Düse eine Temperatur im Bereich von einem Schmelzpunkt des Harzgemischs plus 40°C bis zu dem Schmelzpunkt plus 100°C aufweist.

5. Das Verfahren nach einem der Ansprüche 1 bis 4, wobei
die Löcher der Düse einen Durchmesser von weniger als 1,0 mm aufweisen.

6. Das Verfahren nach einem der Ansprüche 1 bis 5, wobei
der Bereich eine Temperatur von 60°C bis 90°C aufweist.

7. Das Verfahren nach einem der Ansprüche 1 bis 6, wobei
die extrudierten geschäumten Partikel aus Harz auf Polypropylenbasis ein Expansionsverhältnis von dem 3-Fachen bis 24-Fachen aufweisen.

8. Das Verfahren nach einem der Ansprüche 1 bis 7, wobei
das Harz auf Polypropylenbasis mit einer verzweigten Struktur ein Harz ist, das durch Schmelzkneten eines Gemischs erhalten wird, das ein lineares Harz auf Polypropylenbasis, eine Verbindung auf Basis eines konjugierten Diens und einen Radikalpolymerisationsinitiator beinhaltet.

9. Das Verfahren nach einem der Ansprüche 1 bis 8, wobei
das Harz auf Polypropylenbasis mit einer verzweigten Struktur einen Verlustfaktor $\tan \delta$ von nicht mehr als 4 bei 200°C und 0,1 rad/s aufweist.

10. Das Verfahren nach einem der Ansprüche 1 bis 9, wobei
das Harz auf Polypropylenbasis mit einer verzweigten Struktur eine MFR von 0,5 g/10 Minuten bis 20,0 g/10 Minuten bei 230°C aufweist.

11. Das Verfahren nach einem der Ansprüche 1 bis 10, wobei
das Harz auf Polypropylenbasis mit einer verzweigten Struktur eine Schmelzspannung von 3 cN bis 20 cN bei 200°C aufweist.

12. Das Verfahren nach einem der Ansprüche 1 bis 11, wobei
das Harzgemisch einen Schmelzpunkt von 130°C bis 165°C aufweist.

13. Das Verfahren nach einem der Ansprüche 1 bis 12, wobei

das Treibmittel in einer Menge von 0,5 Gewichtsteilen bis 7,0 Gewichtsteilen, bezogen auf 100,0 Gewichtsteile des Harzgemischs, verwendet wird.

14. Ein Verfahren zur Herstellung eines in der Form expandierten Produkts aus Harz auf Polypropylenbasis, wobei das Verfahren umfasst
einen Erhitzungsschritt des Füllens eines Formenhohlraums mit extrudierten geschäumten Partikeln aus Harz auf Polypropylenbasis und des Erhitzens der extrudierten geschäumten Partikel aus Harz auf Polyproplyenbasis im Inneren des Formenhohlraums, wobei der Formenhohlraum durch mindestens zwei in einer Form enthaltene Formteile gebildet ist, wobei die extrudierten geschäumten Partikel aus Harz auf Polypropylenbasis durch das Verfahren nach einem der Ansprüche 1 bis 13 erhalten werden.

15. Das Verfahren nach Anspruch 14, wobei
das in der Form expandierte Produkt aus Harz auf Polypropylenbasis eine 50%-Druckfestigkeit aufweist, die größer ist als ein Bewertungsnormwert (X), der anhand von nachstehender Formel (1) berechnet wird:

wobei die 50%-Druckfestigkeit ein Wert einer Druckspannung bei 50% Kompression ist, wobei der Wert gemessen wird, wenn das in der Form expandierte Produkt aus Harz auf Polypropylenbasis mit einer Rate von 10% einer Dicke des in der Form expandierten Produkts aus Harz auf Polypropylenbasis pro Zeiteinheit gemäß ISO 844 unter Verwendung einer Zug- und Druckprüfmaschine komprimiert wird,
wobei Formel (1) wie folgt ausgedrückt ist:

$$\text{Bewertungsnormwert (X) [MPa]} = (0{,}0000056 \times D^3 + 0{,}062 \times D^2 - 0{,}0302 \times D - 20) / 1000,$$

wobei D eine Dichte (g/l) des in der Form expandierten Produkts aus Harz auf Polypropylenbasis darstellt,
wobei die Dichte des in der Form expandierten Produkts aus Harz auf Polypropylenbasis durch Messen eines Gewichts W (g) des in der Form expandierten Produkts aus Harz auf Polypropylenbasis und Teilen des gemessenen Gewichts W (g) durch ein Volumen V des in der Form expandierten Produkts aus Harz auf Polypropylenbasis erhalten wird.

## Revendications

1. Méthode pour produire des particules expansées extrudées en résine à base de polypropylène, la méthode comprenant :

   une étape de malaxage à l'état fondu dans laquelle une composition qui contient un agent gonflant et un mélange de résine qui contient une résine à base de polypropylène ayant une structure ramifiée est malaxée à l'état fondu au moyen d'une extrudeuse dotée d'une filière,
   une étape d'extrusion dans laquelle la composition est extrudée à travers la filière dans une région qui a une pression inférieure à celle de l'extrudeuse et qui est une phase liquide ;
   une étape de granulation dans laquelle la composition est extrudée dans la région ; et
   une étape dans laquelle des particules expansées extrudées en résine à base de polypropylène sont obtenues,
   l'agent gonflant étant le dioxyde de carbone,
   **caractérisée en ce que**
   la région a une température de 40 °C à 90 °C ;
   la composition a une pression non inférieure à 14,5 MPa à une entrée de la filière ; et
   la composition est déchargée en une quantité supérieure à 2,5 kg/h et non supérieure à 5,0 kg/h pour chacun des trous de la filière.

2. Méthode selon la revendication 1, dans laquelle la composition a une température située dans la plage allant du point de fusion du mélange de résine plus 0 °C au point de fusion plus 40 °C immédiatement après l'entrée dans la filière.

3. Méthode selon la revendication 1, dans laquelle la composition a une température située dans la plage allant du point de fusion du mélange de résine plus 10 °C au point de fusion plus 40 °C immédiatement après l'entrée dans la filière.

4. Méthode selon l'une quelconque des revendications 1 à 3, dans laquelle la filière a une température située dans la plage allant du point de fusion du mélange de résine plus 40 °C au point de fusion plus 100 °C.

5. Méthode selon l'une quelconque des revendications 1 à 4, dans laquelle les trous de la filière ont un diamètre inférieur à 1,0 mm.

6. Méthode selon l'une quelconque des revendications 1 à 5, dans laquelle la région a une température de 60 °C à 90 °C.

7. Méthode selon l'une quelconque des revendications 1 à 6, dans laquelle les particules expansées extrudées en résine à base de polypropylène ont un rapport d'expansion de 3 fois à 24 fois.

8. Méthode selon l'une quelconque des revendications 1 à 7, dans laquelle la résine à base de polypropylène ayant une structure ramifiée est une résine obtenue par malaxage à l'état fondu d'un mélange qui contient une résine à base de polypropylène linéaire, un composé à base de diène conjugué, et un amorceur de polymérisation radicalaire.

9. Méthode selon l'une quelconque des revendications 1 à 8, dans laquelle la résine à base de polypropylène ayant une structure ramifiée a une tangente de l'angle de pertes tan $\delta$ non supérieure à 4 à 200 °C et à 0,1 rad/s.

10. Méthode selon l'une quelconque des revendications 1 à 9, dans laquelle la résine à base de polypropylène ayant une structure ramifiée a un MFR de 0,5 g/10 minutes à 20,0 g/10 minutes à 230 °C.

11. Méthode selon l'une quelconque des revendications 1 à 10, dans laquelle la résine à base de polypropylène ayant une structure ramifiée a une tension à l'état fondu de 3 cN à 20 cN à 200 °C.

12. Méthode selon l'une quelconque des revendications 1 à 11, dans laquelle le mélange de résine a un point de fusion de 130 °C à 165 °C.

13. Méthode selon l'une quelconque des revendications 1 à 12, dans laquelle l'agent gonflant est utilisé en une quantité de 0,5 partie en poids à 7,0 parties en poids pour 100,0 parties en poids du mélange de résine.

14. Méthode pour produire un produit expansé dans le moule en résine à base de polypropylène, la méthode comprenant une étape de chauffage dans laquelle un espace de moulage est rempli par des particules expansées extrudées en résine à base de polypropylène et les particules expansées extrudées en résine à base de polypropylène sont chauffées à l'intérieur de l'espace de moulage, l'espace de moulage étant formé par au moins deux parties de moule incluses dans un moule, les particules expansées extrudées en résine à base de polypropylène étant obtenues par la méthode selon l'une quelconque des revendications 1 à 13.

15. Méthode selon la revendication 14, dans laquelle le produit expansé dans le moule en résine à base de polypropylène a une résistance à une compression de 50 % qui est supérieure à une valeur normalisée d'évaluation (X) calculée à partir de la formule (1) ci-dessous,

la résistance à une compression de 50 % étant la valeur de la force compressive à une compression de 50 %, la valeur étant mesurée lorsque le produit expansé dans le moule en résine à base de polypropylène est compressé à un taux de 10 % par unité de temps de l'épaisseur du produit expansé dans le moule en résine à base de polypropylène, conformément à la norme ISO 844, avec l'utilisation d'une machine de test de tension et de compression,
la formule (1) étant exprimée comme suit :

valeur normalisée d'évaluation (X) [MPa] = $(0,0000056 \times D^3 + 0,062 \times D^2 - 0,0302 \times D - 20)/1000$,

où D représente une masse volumique (g/l) du produit expansé dans le moule en résine à base de polypropylène, la masse volumique du produit expansé dans le moule en résine à base de polypropylène étant obtenue par mesure du poids W (g) du produit expansé dans le moule en résine à base de polypropylène et division, par le volume V du produit expansé dans le moule en résine à base de polypropylène, du poids W (g) qui a été mesuré.

FIG. 1

**EP 4 316 764 B1**

**REFERENCES CITED IN THE DESCRIPTION**

**Patent documents cited in the description**

- WO 2020004429 A
- JP 7011041 A
- JP 2002542360 A, Tokuhyo